# EUROPEAN PATENT SPECIFICATION

(11) **EP 2 928 843 B1**
(45) Date of publication and mention of the grant of the patent: **26.08.2020**
(21) Application number: 13860163.8
(22) Date of filing: 03.12.2013
(51) Int. Cl.: C04B 35/56, H01M 4/58

(54) **COMPOSITIONS COMPRISING FREE-STANDING TWO-DIMENSIONAL NANOCRYSTAL**
ZUSAMMENSETZUNGEN MIT ZWEIDIMENSIONALEM FREISTEHENDEN NANOKRISTALL
COMPOSITIONS CONTENANT DES NANOCRISTAUX BIDIMENSIONNELS AUTONOMES

(30) Priority: 04.12.2012 US 201261733015 P
(43) Date of publication of application: 14.10.2015
(73) Proprietor: Drexel University, Philadelphia, PA 19104 (US)
(72) Inventor: BARSOUM, Michel, W., Moorestown, NJ 08057 (US); GOGOTSI, Yury, Warminster, PA 18974 (US); ABDELMALAK, Michael, Naguib, Philadelphia, PA 19104 (US); MASHTALIR, Olha, Philadelphia, PA 19125 (US)
(74) Representative: Carpmaels & Ransford LLP
(86) International application number: PCT/US2013/072733
(87) International publication number: WO 2014/088995

(56) References cited:
- WO-A1-2010/128492
- WO-A1-2012/120264
- US-A- 4 801 368
- J ET AL: "A Non-Aqueous Asymmetric Cell with a Ti 2 C-Based Two-Dimensional Negative Electrode", A1368 Journal of The Electrochemical Society, 1 January 2012 (2012-01-01), pages 1368-1373, XP055265916, DOI: 10.1149/2.003208jes] Retrieved from the Internet: URL:http://jes.ecsdl.org/content/159/8/A13 68.full.pdf
- MICHAEL NAGUIB ET AL: "MXene: a promising transition metal carbide anode for lithium-ion batteries", ELECTROCHEMISTRY COMMUNICATIONS, ELSEVIER, AMSTERDAM, NL, vol. 16, no. 1, 3 January 2012 (2012-01-03), pages 61-64, XP028454922, ISSN: 1388-2481, DOI: 10.1016/J.ELECOM.2012.01.002 [retrieved on 2012-01-09]
- MICHAEL NAGUIB ET AL: "Two-Dimensional Transition Metal Carbides", ACS NANO, vol. 6, no. 2, 28 February 2012 (2012-02-28), pages 1322-1331, XP055265886, US ISSN: 1936-0851, DOI: 10.1021/nn204153h
- NAQUIB ET AL.: 'Two-Dimensional Nanocrystals Produced by Exfoliation of Ti3AIC2' ADV. MATER. vol. 23, no. 37, October 2011, pages 4248 - 4253, XP055141316 Retrieved from the Internet: <URL:http://scholar.google.co m/schoiar?hi=en&q=Two-Dimensiona!+Nanocryst ais+Produced+by +Exfoliation+of+Ti+3+AIC+2&btnG=&as_sdt=1%2 C78as_sdtp=> [retrieved on 2014-03-07]
- NAQUIB ET AL.: 'Synthesis of a new nanocrystalline titanium aluminum fluoride phase by reaction of Ti2AIC with hydrofluoric acid' RSC ADVANCES vol. 1, no. 8, November 2011, pages 1493 - 1499, XP055258388 Retrieved from the Internet: <URL:http://pubs.rsc.org.ezproxy.neu.edu/en /Content/ArticleLanding/2011/RA/c1 ra00390a#! divAbstract> [retrieved on 2014-03-07]

## Description

### TECHNICAL FIELD

Described are compositions comprising free standing two dimensional crystalline solids, and methods of making the same.

### BACKGROUND

Typically, two-dimensional, 2-D, free-standing crystals exhibit properties that differ from those of their three-dimensional, 3-D, counterparts. Currently, however, there are relatively few materials which can be described as 2-D, atomically-scaled layered solids. Clearly the most studied freestanding 2-D material is graphene, but other materials include hexagonal BN, certain transition metal oxides, hydroxides, and silicates, including clays, S₂N, MoS₂ and WS₂ are also known. Currently, the number of non-oxide materials that have been exfoliated is limited to two fairly small groups, viz. hexagonal, van der Waals bonded structures (e.g. graphene and BN) and layered metal chalcogenides (e.g. MoS₂, WS₂, etc.).

Although graphene has attracted more attention than all other 2-D materials together, its simple chemistry and the weak van der Waals bonding between layers in multi-layer structures limit its use. Given the properties of graphene for applications ranging from composite reinforcement to electronics, there is interest in other new materials which may also be described as 2-D, atomically-scaled layered solids.

Come et al., "A Non-Aqueous Asymmetric Cell with a Ti 2 C-Based Two-Dimensional Negative Electrode", A1368 Journal of The Electrochemical Society, pages 1368 - 1373, URL: http://jes.ecsdl.org/content/159/8/A1368.full.pdf discusses Li-ion insertion into a 2-D strcture of Ti₂C, and a Ti₂C/activated carbon asymmetric cell.

### SUMMARY

The present invention is a stacked assembly according to claim 1. Further embodiments of the invention are described in the dependent claims.

Disclosed are compositions comprising free standing and stacked assemblies of two dimensional crystalline solids, and methods of making the same.

In particular, compositions comprising at least one layer having first and second surfaces are disclosed, each layer comprising:
a substantially two-dimensional array of crystal cells,
each crystal cell having an empirical formula of Mₙ₊₁Xₙ , such that each X is positioned within an octahedral array of M,
wherein M is at least one Group IIIB, IVB, VB, or VIB metal;
wherein each X is C and/or N (i.e., stoichiometrically X = CₓN_{y}, including where x + y = 1); and
n = 1, 2, or 3.

Compositions may be composed of individual or a plurality of such layers.

At least one of the surfaces may be coated with a coating comprising alkoxide, carboxylate, halide, hydroxide, oxide, sub-oxide, nitride, sub-nitride, sulfide, thiol, or a combination thereof.

Also provided are polymer composites comprising an organic polymer and at least one composition described in the preceding paragraphs.

Also provided is at least one stacked assembly of at least two layers having first and second surfaces, each layer comprising:
a substantially two-dimensional array of crystal cells,
each crystal cell having the empirical formula of Mₙ₊₁Xₙ, such that each X is positioned within an octahedral array of M;
wherein M is a Group IIIB, IVB, VB, or VIB metal;
each X is C and/or N (i.e., stoichiometrically X = CₓN_{y}, including where x + y = 1); and
n = 1, 2, or 3;
wherein the layers are characterized as having an average surface area and interlayer distance.

At least one of the surfaces of the layers within a stacked assembly may have bound thereto alkoxide, carboxylate, halide, hydroxide, oxide, sub-oxide, nitride, sub-nitride, sulfide, thiol, or a combination thereof.

The stacked assemblies described in the preceding paragraphs may be capable of, or have atoms or ions, that are intercalated between at least some of the layers. These structures may be part of an energy storing device or a battery.

Also described are methods of preparing compositions comprising:removing substantially all of the A atoms from a MAX-phase composition having an empirical formula of Mₙ₊₁AXₙ.
wherein M is at least one Group IIIB, IVB, VB, or VIB metal,
wherein A is an A-group element;
each X is C and/or N (i.e., stoichiometrically X = CₓN_{y}, including where x + y = 1); and
n = 1, 2, or 3,
thereby providing a composition comprising at least one layer having a first and second surface, each layer comprising a substantially two-dimensional array of crystal cells.

### BRIEF DESCRIPTION OF THE DRAWINGS

The following figures are presented as illustrative examples, and should not be considered to limit the scope of the invention. As noted above, the present invention is a stacked assembly according to claim 1. Further embodiments of the invention are described in the dependent claims. Except where otherwise noted, the scales of the figures may be exaggerated for illustrative purposes.

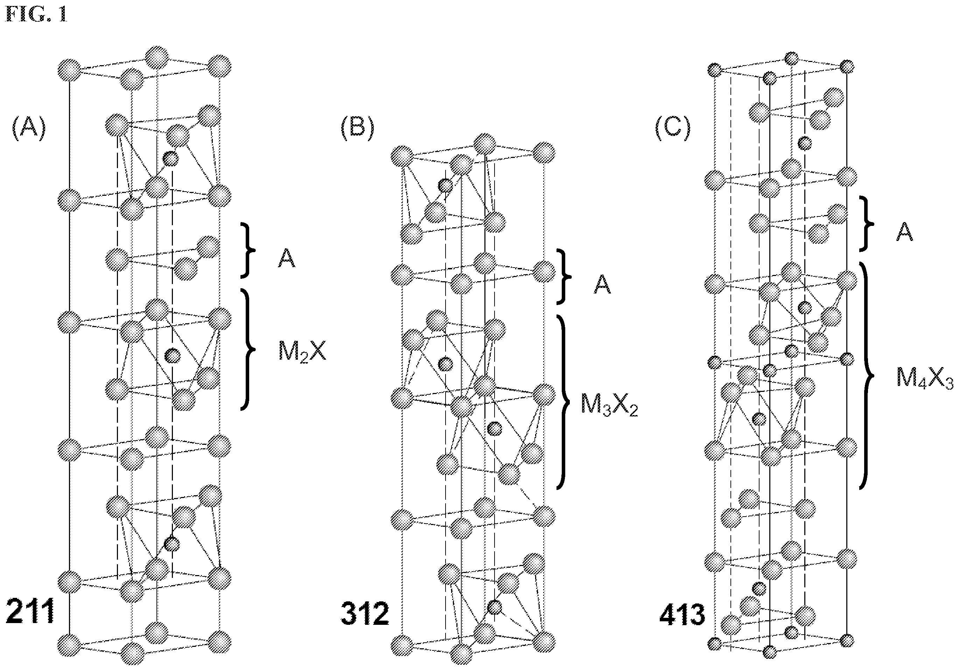

**FIG. 1** illustrates indicative crystal structures of the MAX phases in which the transitional metal carbide or nitride (Mₙ₊₁Xₙ) layers are interleaved with layers of pure A-group element. **FIG. 1A** illustrates the configuration of the M₂X framework within the 211 class of MAX phase compounds, wherein every third layer is A-group. **FIG. 1B** illustrates the configuration of the M₃X₂ framework within the 312 class of MAX phase compounds, wherein every fourth layer is A-group. **FIG. 1C** illustrates the configuration of the M₄X₃ framework within the 413 class of MAX phase compounds, wherein every fifth layer is A-group.
**FIG. 2** provides a 3-dimensional **(****FIG. 2A****)** and 2-dimensional **(****FIG. 2B****)** representation of the crystal structure of the 312 class of compounds
**FIG. 3** illustrates a schematic representation of the exfoliation process for Ti₃AlC₂. **FIG. 3(a)** provides the T1₃AlC₂ structure. **FIG. 3(b)** diagrammatically illustrates a structure where the Al atoms have been replaced by OH after reaction with HF. **FIG. 3(c)** illustrates a structure resulting from the subsequent breakage of the hydrogen bonds and separation of nano-sheets after sonication in methanol.

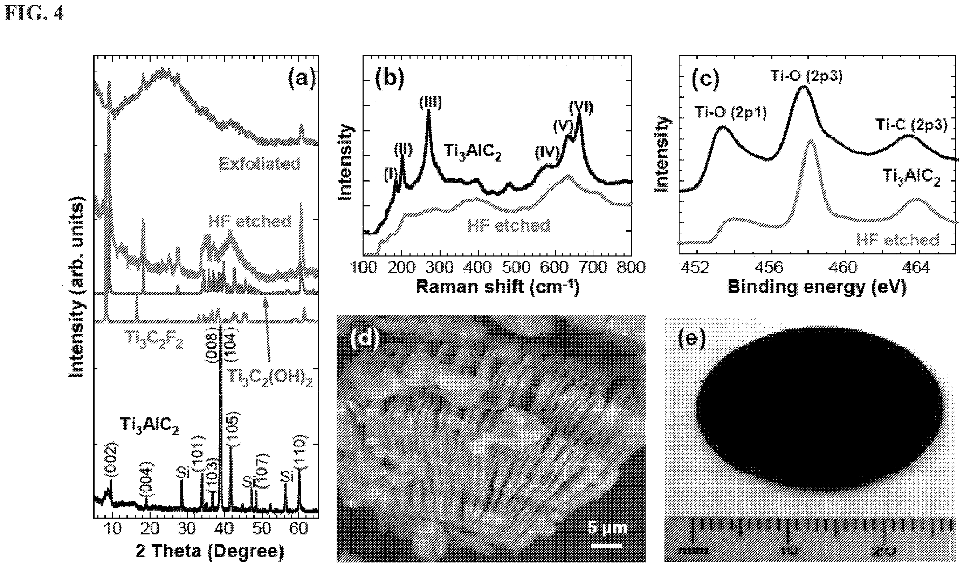

**FIG. 4** provides analytical date of the Ti₃AlC₂ before and after exfoliation. **FIG. 4(a)** provides an XRD pattern for Ti₃AlC₂ before any treatment, simulated XRD patterns of Ti₃C₂F₂ and Ti₃C₂(OH)₂, measured XRD patterns of T1₃AlC₂ after HF treatment, and exfoliated nanosheets produced by sonication. **FIG. 4(b)** shows Raman spectra of T1₃AlC₂ before and after HF treatment. **FIG. 4(c)** provides XPS spectra of Ti₃AlC₂ before and after HF treatment. **FIG. 4(d)** provides an SEM image of a sample after HF treatment. **FIG. 4(e)** shows a cold processed 25 mm disk of etched and exfoliated material after HF treatment.

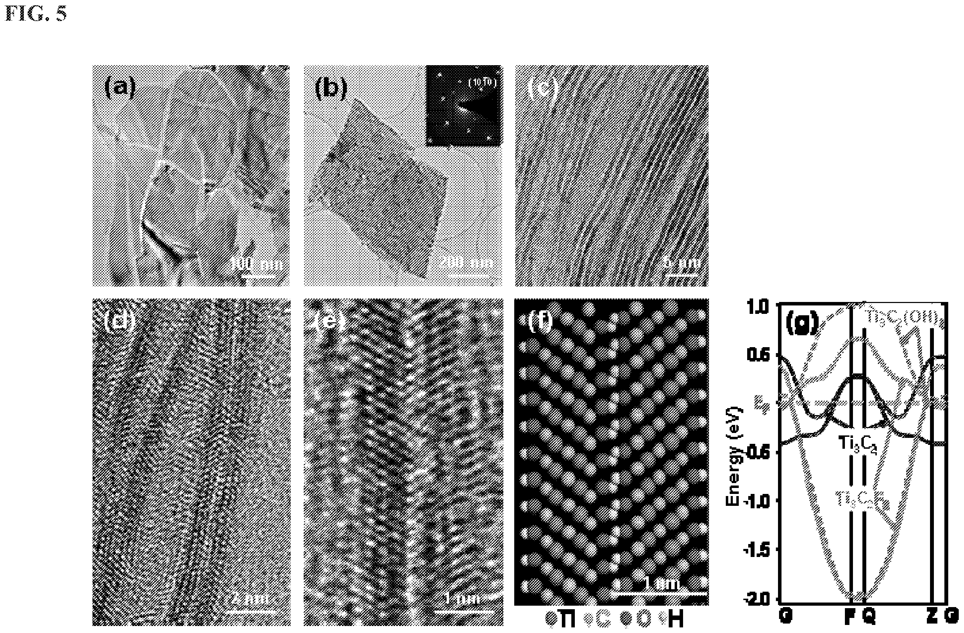

**FIG. 5** shows micrographs of exfoliated MXene nanosheets. **FIG. 5(a)** shows TEM micrographs of exfoliated 2-D nanosheets of Ti-C-O-F. **FIG. 5(b)** shows TEM micrographs of exfoliated 2-D nanosheets; inset selected area diffraction, SAD, shows hexagonal basal plane. **FIG. 5(c)** shows TEM micrographs of single and double layer MXene sheets. **FIG. 5(d)** shows an HRTEM image showing the separation of individual sheets after sonication. **FIG. 5(e)** shows an HRTEM image of bilayer Ti₃C₂(OH)ₓF_{y} (alternatively, Ti₃C₂Tₛ). **FIG. 5(f)** shows an atomistic model of the layer structure shown in **FIG. 5(e). FIG. 5(g)** shows a calculated band structure of single layer MXene with -OH and -F surface termination and no termination (Ti₃C₂), showing a change from metal to semiconductor as a result of change in the surface chemistry.

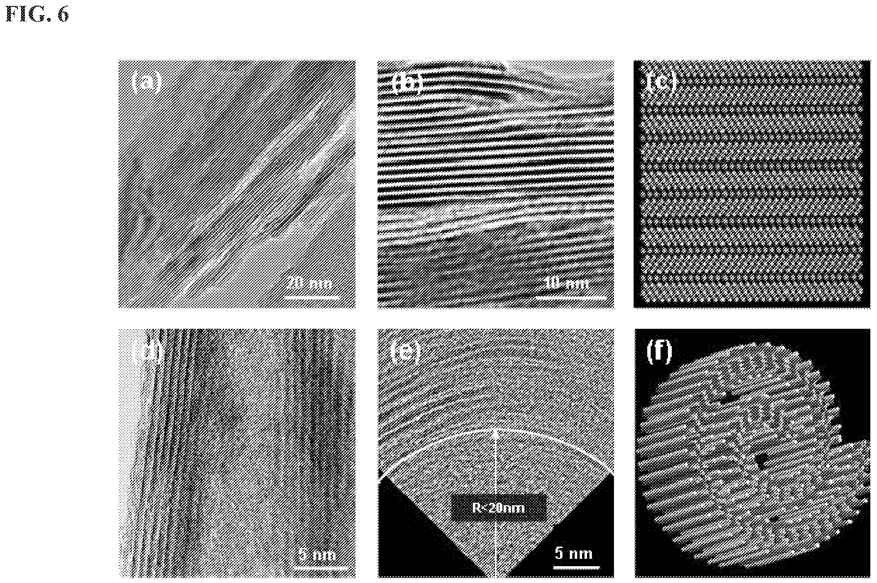

**FIG. 6** provides TEM images and simulated structures of multi-layer MXene. **FIG. 6(a)** provides TEM micrographs for stacked layers of Ti-C-O-F. Those are similar to multilayer graphene or exfoliated graphite that finds use in electrochemical storage. **FIG. 6(b)** provides TEM micrographs for the same stacked layers **FIG. 6(a)** but at a higher magnification. **FIG. 6(c)** provides a model of the Li-intercalated structure of Ti₃C₂ (Ti₃C₂Li₂). **FIG. 6(d)** provides TEM micrographs for a conical scroll of about 20 nm in outer diameter. **FIG. 6(e)** provides a cross sectional TEM image of a scroll with inner radius less than 20 nm. **FIG. 6(f)** provides a schematic representation of an MXene scroll (OH-terminated).

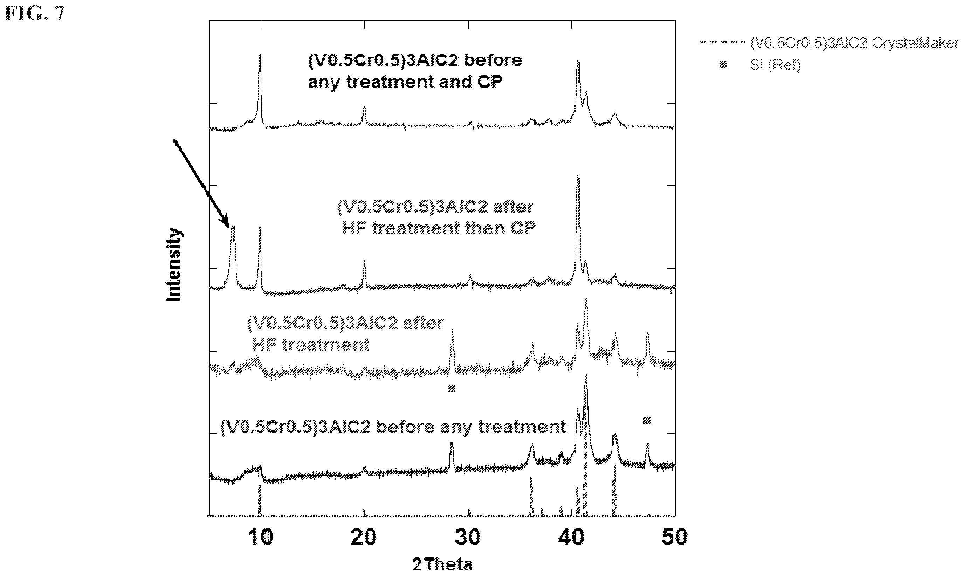

**FIG. 7** provides X-ray diffraction patterns of (V_{i/2}Cr_{i/2})₃AlC₂ before and after exfoliation. From the bottom up, **FIG. 7** provides a simulated XRD pattern for (V_{i/2}Cr_{i/2})₃AlC₂ as determined by CrystalMaker software, and measured XRD patterns for powdered (V_{i/2}Cr_{i/2})₃AlC₂ before any treatment, (V_{1/2}Cr_{1/2})₃AlC₂ after HF treatment, (V_{1/2}Cr_{1/2})₃AlC₂ after HF treatment and cold pressing (CP), and (V_{i/2}Cr_{i/2})₃AlC₂ before any treatment or cold pressing. The peak at 2θ = 7.3° appears only after HF treatment and cold pressing. By analogy to the results shown for Ti₃AlC₂, this peak is attributed to (V_{1/2}Cr_{1/2})₃C₂. See Example 5.
**FIG. 8** shows SEM micrographs and XRD spectra of chemically exfoliated Ti₂AlC.
**FIG. 9** shows a secondary electron SEM micrograph for TiNbAlC after HF treatment and XRD patterns before and after HF treatment at room temperature for TiNbAlC (50% HF 28 hrs) (inset is the XRD for (V_{0.5}Cr_{0.5})AlC₂; 50% HF 65 hrs, and cold pressed zoomed-in on the (0002) peak).
**FIG. 10** shows SEM micrographs and XRD spectra of chemically exfoliated Ti₄AlC₃ (50% HF 72 hours at RT).
**FIG. 11** shows SEM micrographs and XRD spectra of chemically exfoliated Ti₃AlCN (30% HF 18 hours at RT).
**FIG. 12** shows additional SEM micrographs of chemically exfoliated Ti₃AlCN (30% HF 18 hours at RT).
**FIG. 13** shows additional SEM micrographs of chemically exfoliated Ti₃AlCN (30% HF 18 hours at RT).
**FIG. 14** shows SEM micrographs and XRD spectra of chemically exfoliated (V_{1/2}Cr_{1/2})₃AlC₂ (50% HF 69 hours at RT).
**FIG. 15** shows additional SEM micrographs of chemically exfoliated (V_{1/2}Cr_{1/2})₃AlC₂ (50% HF 69 hours at RT).
**FIG. 16** shows SEM micrographs of chemically exfoliated (V_{1/2}Cr_{1/2})₃AlC₂ (50% HF 69 hours at RT).
**FIG. 17** shows SEM micrographs and EDX analytical results of chemically exfoliated Ti₃AlC₂ (10% HF 2 hours at 65°C).
**FIG. 18****(a/b)** shows TEM micrographs of chemically exfoliated Ti₃AlC₂ (50% HF 22 hours at RT). **FIG. 18(b)** is an enlargement of bottom micrograph of **FIG. 18(a)****.**
**FIG. 19** shows XRD spectra for samples of chemically exfoliated Ti₃AlC₂. generated as a function of temperature in 50 wt% HF for 2 hours.
**FIG. 20** shows XRD spectra for samples of chemically exfoliated Ti₃AlC₂. generated as a function of time in 50 wt% HF at room temperature.
**FIG. 21** shows resistivity for various chemically exfoliated Ti₃AlC₂, generated as a function of time, in 50% HF at ambient temperature.
**FIG. 22** shows XRD spectra for samples of chemically exfoliated Ti₃AlC₂. generated as a function of initial particle size of the MAX phase precursor. The materials were held for 2 hours in 50 wt% HF at room temperature

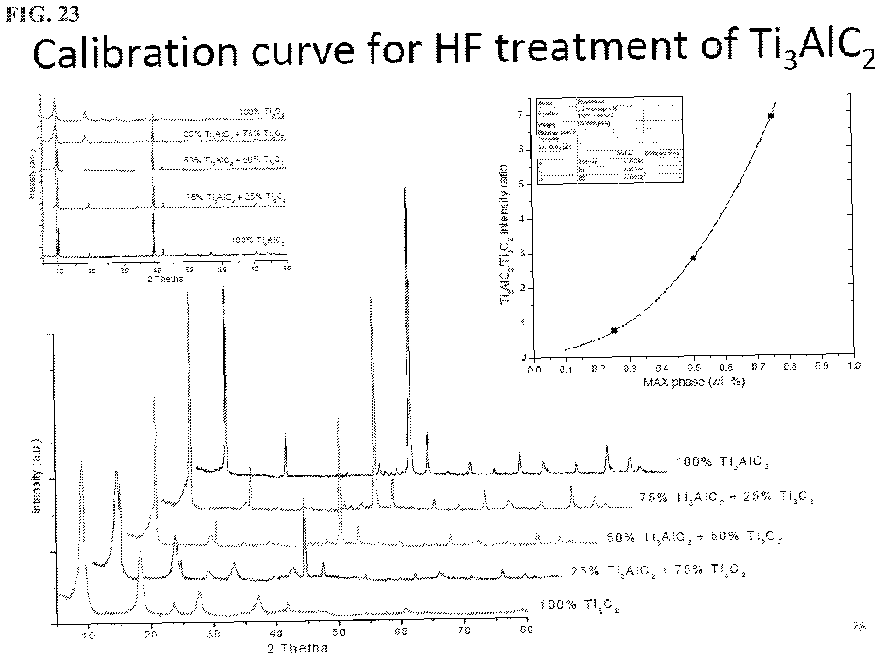

**FIG. 23** shows XRD spectra forming the basis for a calibration curve of chemically exfoliated Ti₃AlC₂, generated as a function of composition.

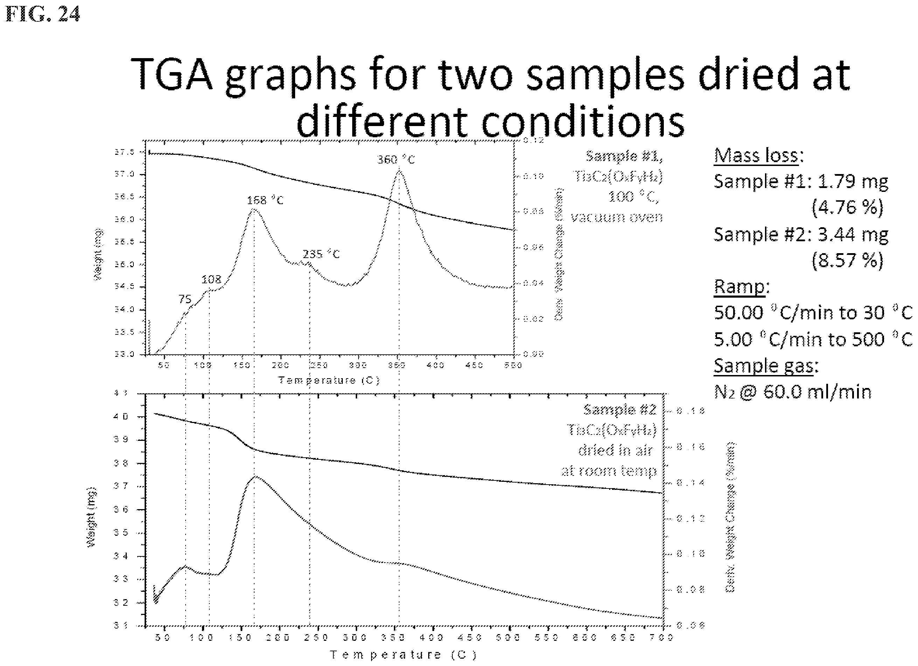

**FIG. 24** shows TGA graphs for two samples of Ti₃C₂(OH)ₓ(F)_{y} (alternatively, Ti₃C₂Tₛ) prepared at two different drying conditions
**FIG. 25** shows exemplary experimental parameters for tests to evaluate the electrochemical exfoliation of MAX phase materials; see Example 9.
**FIG. 26** shows a series of Raman spectra for samples obtained in tests described in Example 8. Curves (a) and (b) are the spectra of the exfoliated material obtained after the electrochemical aniodic polarization treatment of the Ti₂SnC MAX phase in 12 M HCl. Curves (c) through (e) are the initial spectra of Ti₂SnC.
**FIG. 27(a)** shows the XRD data of the exfoliated material obtained after the electrochemical aniodic polarization treatment of the Ti₂SnC MAX phase in 12 M HCl. **FIG. 27(b)** shows the XRD data of the initial Ti₂SnC material. **FIG. 27(c)** shows the XRD data of the Ti₂SnC material treated in Ar as 1250°C. **FIG. 27(d)** is a simulated XRD pattern for the Ti₂SnC system. Note: the asterisks and crossed boxes mark the characteristic peak positions of Si_{pc} and TiC, respectively.
**FIG. 28****(a, b, c)** show SEM and EDX/EDS data of the exfoliated material obtained after the electrochemical aniodic polarization treatment of the Ti₂SnC MAX phase in 12 M HCl. The circles represent the approximate area subjected to EDX/EDS analysis.

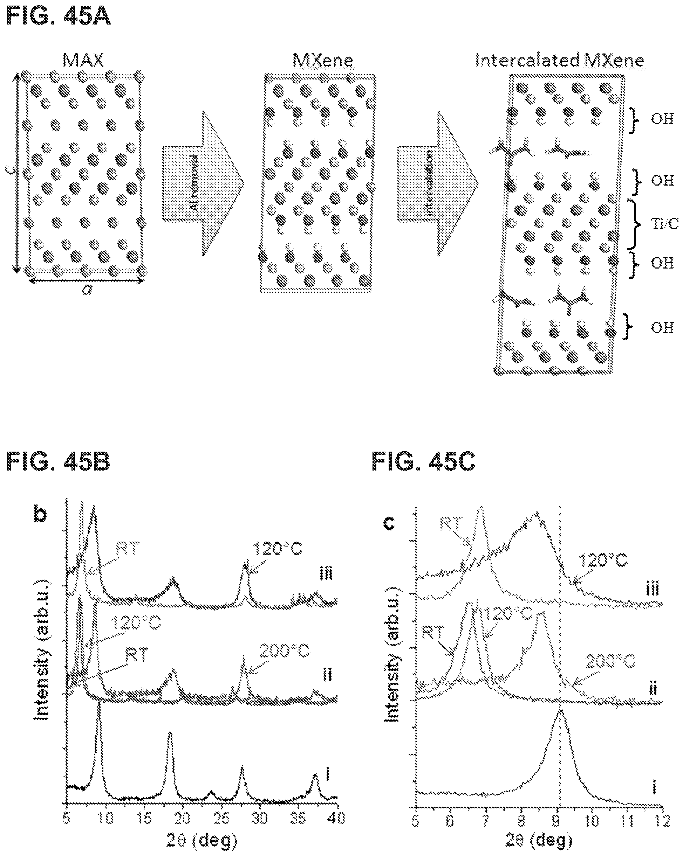

**FIG. 45A-C** shows evidence of MXene intercalation. **FIG. 45A** shows a schematic representation of the synthesis and intercalation of MXene. To produce MXene, the A1 layer was removed from the corresponding MAX phase in aqueous HF solution resulting in OH terminated MXene layers. Then MXene was treated with an intercalant (urea is shown here as an example) yielding MXene intercalation compound. **FIG. 45B****,** XRD patterns of MXene: (i) as-received, before any treatment, (ii) after HM treatment, and then washed with ethanol, and (iii) after HM in DMF treatment, washed with DMF, dried at different conditions: a whole range diffractograms. **FIG. 45C** is an expanded image of **FIG. 45B** but zoomed on the (002) peak in 5-12° 2θ range. Intercalation was performed at 80°C for 24h. The MXene powder used for intercalation was dried at 100°C for 22 h. See **Example 14.**
**FIG. 46** shows XRD patterns of MXene: (i) before any treatment, (ii) after HM treatment in DMF at 80 °C, (iii) after HM treatment at 80°C; and after HM treatment in DMF at 80°C (iv) and at relevant temperature (v). Patterns i-iii: initial MXene was dried at 100 °C for 22 h before intercalation. Patterns iv-v: as-received wet MXene was used as an initial material. The resulting powders were washed with DMF after intercalation. See **Example 14.**
**FIG. 47A-B** shows XPS spectra of MXene intercalated with HM at 80°C for 24 h **(****FIG. 47A****)** and with HM and DMF at 80 °C for 24 h **(****FIG. 47B****).** Both insets showed N1s peaks for corresponding samples.
**FIG. 48** shows images from electron microscopy analyses, including SEM images before **(****FIG. 48A****)** and after **(****FIG. 48B****)** intercalation of MXene with HM and DMF (24 h at 80 °C), respectively; TEM **(****FIG. 48C****)** and HRTEM **(****FIG. 48D****)** images with corresponding SAED pattern as inset of MXene before intercalation; TEM image **(****FIG. 48E****)** and SAED pattern **(****FIG. 48F****)** of intercalated MXene.
**FIG. 49** shows XRD patterns of MXene: (i) before any treatment,( ii) after DMSO treatment taken 30 min and 3 weeks after drying in a desiccator at RT, (iii) after urea treatment.
**FIG. 50** shows XRD patterns of Ti₃CN-based MXene (i) before and after HM treatment and TiNbC-based MXene (i) before and after HM treatment.

### DETAILED DESCRIPTION OF ILLUSTRATIVE EMBODIMENTS

The present invention which is a stacked assembly according to claim 1, may be understood more readily by reference to the following detailed description taken in connection with the accompanying Figures and Examples, which form a part of this disclosure. It is to be understood that this invention is not limited to the specific products, methods, conditions or parameters described and / or shown herein, and that the terminology used herein is for the purpose of describing particular embodiments by way of example only and is not intended to be limiting of any claimed invention. Similarly, unless specifically otherwise stated, any description as to a possible mechanism or mode of action or reason for improvement is meant to be illustrative only, and the invention herein is not to be constrained by the correctness or incorrectness of any such suggested mechanism or mode of action or reason for improvement. Throughout this text, it is recognized that the descriptions refer both to compositions and to the articles and devices derived therefrom, as well as the methods of manufacture and use.

In the present disclosure the singular forms "a," "an," and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

When values are expressed as approximations by use of the antecedent "about," it will be understood that the particular value forms another embodiment. In general, use of the term "about" indicates approximations that can vary depending on the desired properties sought to be obtained by the disclosed subject matter and is to be interpreted in the specific context in which it is used, based on its function, and the person skilled in the art will be able to interpret it as such. In some cases, the number of significant figures used for a particular value may be one non-limiting method of determining the extent of the word "about." In other cases, the gradations used in a series of values may be used to determine the intended range available to the term "about" for each value. Where present, all ranges are inclusive and combinable. That is, reference to values stated in ranges includes each and every value within that range.

It is to be appreciated that certain features which are, for clarity, described herein in the context of separate embodiments, may also be provided in combination in a single embodiment. Conversely, various features that are, for brevity, described in the context of a single embodiment, may also be provided separately or in any subcombination. Finally, while an embodiment may be described as part of a series of steps or part of a more general composition or structure, each said step may also be considered an independent embodiment in itself.

Various embodiments described here provide for crystalline compositions comprising at least one layer having first and second surfaces, each layer comprising a substantially two-dimensional array of crystal cells; each crystal cell is an ordered array of atoms having an empirical formula of Mₙ₊₁Xₙ , such that each X is positioned within an octahedral array of M; wherein M is at least one Group IIIB, IVB, VB, or VIB metal; wherein each X is C or N (i.e., stoichiometrically X = CₓN_{y}, including where x + y = 1); and n = 1, 2, or 3. In some embodiments, these compositions comprise a plurality of layers. Other embodiments provide for stacked assemblies of such layers. Collectively, such compositions are referred to herein as "MXene," "MXene compositions," or "MXene materials." Additionally, these terms "MXene," "MXene compositions," or "MXene materials" also refer to those compositions derived by the chemical exfoliation of MAX phase materials, whether these compositions are present as free-standing 2-dimensional or stacked assemblies (as described further below). **FIG. 1** provides a representation of the crystal cells of various Mₙ₊₁Xₙ (where n = 1, 2, or3) frameworks, presented however, in the context of corresponding MAX-phase materials (see also below). In various embodiments, each X is positioned within an octahedral array of M.

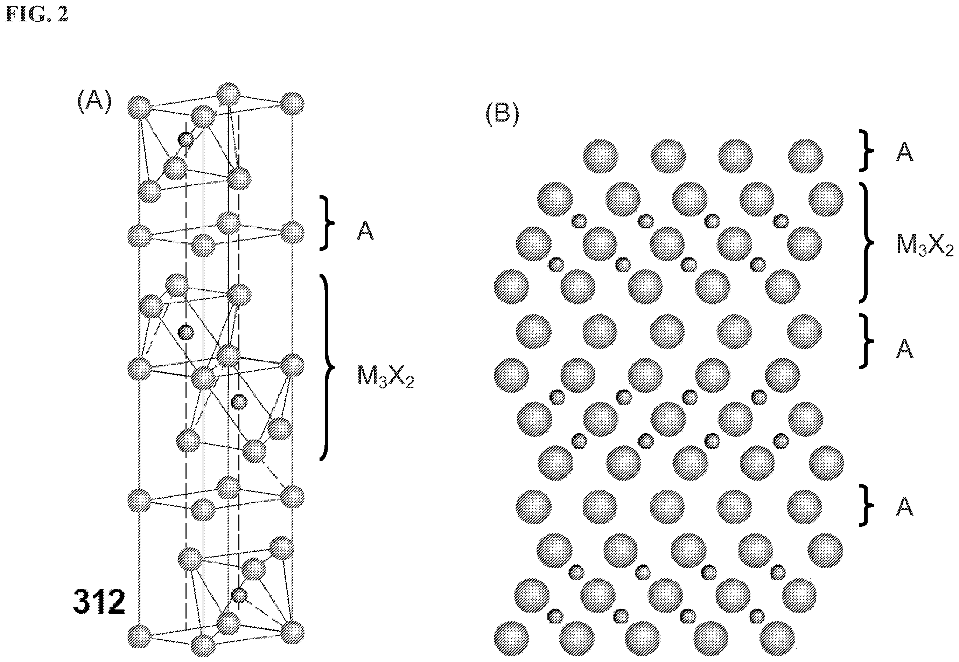

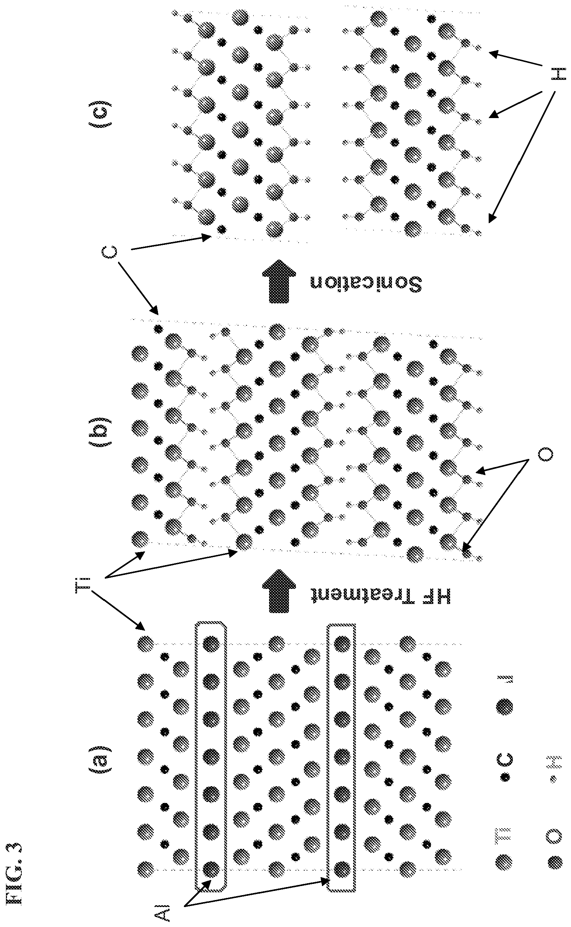

Analogous to other so-called two-dimensional, atomically-scaled layered solid materials, such as graphene or hexagonal BN, these MXene crystalline compositions may be free-standing or be present in stacked compositions. As used herein, the term "free standing" refers to individual layers wherein the adjacent composite crystal layers are not bonded to one another by covalent bonds or connected by metal-lattice bonds, but may be joined by intervening hydrogen (or even weaker) bonding, such that each such layer can be physically manipulated. See e.g., **FIGs. 2** and **3****.** However, this term does not preclude the deposition of these layers or stacked layers on substrates or within polymer compositions (see also below).

The term "crystalline compositions comprising at least one layer having first and second surfaces, each layer comprising a substantially two-dimensional array of crystal cells" refers to the unique character of these materials. For purposes of visualization, the two-dimensional array of crystal cells may be viewed as an array of cells extending in an x-y plane, with the z-axis defining the thickness of the composition, without any restrictions as to the absolute orientation of that plane or axes. It is preferred that the at least one layer having first and second surface contain but a single two-dimensional array of crystal cells (that is, the z-dimension is defined by the dimension of approximately one crystal cell), such that the planar surfaces of said cell array defines the surface of the layer, it should be appreciated that real compositions may contain portions having more than single crystal cell thicknesses.

That is, as used herein, "a substantially two dimensional array of crystal cells" refers to an array which preferably includes a lateral (in x-y dimension) array of crystals having a thickness of a single cell (e.g., corresponding to the M₂X, M₃X₂, or M₄X₃ cells as depicted in **FIG. 1**), such that the top and bottom surfaces of the array are available for chemical modification.

It should also be appreciated that, analogous to graphene or hexagonal BN compositions, this description of a planar or two-dimensional array should not be interpreted to describe a necessarily flat structure; rather such compositions may also take the form of a curved or undulating plane, a scroll, or a cylinder or tube (e.g., analogous to the structure of a carbon or BN nanotube).

In certain embodiments, the compositions may contain C or N atoms, or a mixture thereof, but in any case, these atoms are positioned within an octahedral or pseudo-octahedral array of M atoms, reminiscent of the positioning of the carbon or nitrogen atom within MAX-phase materials. While not necessarily being bound to the scientific accuracy of this statement, this arrangement appears to protect the C and/or N atoms from external chemical attack, while at the same time providing a degree of structural strength to the 2-dimensional layers.

Given the difficulties in obtaining crystallographic evidence as to the crystallinity of materials having such few layers (e.g., less than about 5 cell layers), owing to the reduced level or lack of constructive interference of such few layers, these materials may be characterized by measuring the thickness of the individual layers (measured, for example, by Transmission Electron Micrography or atomic force microscopy). Depending on the particular empirical formula of the given material, the thickness of a given single cell layer will be on the order of about 0.2 to about 0.3 nm (preferably about 0.25 nm) for M₂X compositions, about 0.3 to about 0.7 nm (preferably about 0.5 nm) for M₃X₂ compositions, and about 0.6 to about 0.9 nm (preferably about 0.75 nm) for M₄X₃ compositions. As described more fully below, one method of preparing these compositions is to react a precursor MAX phase material so as to remove the labile A-phase, and exfoliating the resulting structure. In these cases, it is so generally observed that the crystallinity of the resulting MXene framework, which existed in the original MAX phase structure, is sufficiently robust as to be retained during the preparation process, so that the thickness measurements by themselves can be used to characterize the materials, even in the absence of crystallographic analysis.

These MXene materials (even individual or exfoliated layers) can also be characterized by measuring the X-ray diffraction (XRD) spectra of (optionally cold pressed) stacked layers (see, e.g., Example 2, **FIG. 4(a)** and Example 4, **FIG. 7** below). That is, such stacking provides a sample of sufficient thickness (number of layers) to allow for sufficient constructive interference so as to provide for a measurable XRD pattern to be obtained. One distinguishing feature of XRD patterns thus generated is the presence of peaks at 2θ of ca. 5-7° (i.e., between about 4.5° and about 9.5° when Cu K_{α} radiation is used), corresponding to the d-spacing (thickness) of the individual layers (including the surface coatings of each layer) and lower than the (002) peaks of the corresponding MAX phase materials. That this MXene peak occurs at lower 2θ values, reflecting higher d-spacings of the layers, than the corresponding (002) plane in a corresponding MAX phase material is consistent with the greater spacing of the crystal cells of the two materials in the former relative to the latter (e.g., referring to **FIG. 3****,** the individual layers of the Ti₃C₂ in **FIG. 3(b)** are spaced further apart than the corresponding layers in **FIG. 3(a)**).

As described herein, the terms "M" or "M atoms," "M elements," or "M metals" refers to one or more members of the Groups IIIB, IVB, VB, or VIB or (aka) Groups 3-6 of the periodic table, either alone or in combination, said members including Sc, Y, Lu, Ti, Zr, Hf, V, Nb, Ta, Cr, Mo, and W. The terms "M" or "M atoms," "M elements," or "M metals" may also include Mn. In preferred embodiments, the transition metal is one or more of Sc, Ti, Zr, Hf, V, Nb, Ta, Cr, and/or Mo. In other preferred embodiments, the transition metal is one or more of Ti, Zr, V, Cr, Mo, Nb, and/or Ta. In even more preferred embodiments, the transition metal is Ti, Ta, Mo, Nb, V, and/or Cr.

The empirical formula Mₙ₊₁Xₙ , wherein X is C, N, or a combination thereof, and n = 1, 2, or 3 gives rise to a number of possible composition. For example, and while not intending to be limited to this list, exemplary compositions when n = 1 includes those wherein the empirical formula of the crystalline phase is Sc₂C, Sc₂N, Ti₂C, Ti₂N, Mo₂C, V₂C, V₂N, Cr₂C, Cr₂N, Zr₂C, Zr₂N, Nb₂C, Nb₂N, Hf₂C, and Hf₂N. Similarly, non-limiting exemplary compositions when n = 2 includes those wherein the empirical formula of the crystalline phase is Ti₃C₂, Ti₃N₂, V₃C₂, V₃C₂, Ta₃C₂, and Ta₃N₂ and when n = 3 includes those wherein the empirical formula is Ti₄C₃, Ti₄N₃, V₄C₃, V₄N₃, Ta₄C₃ and Ta₄N₃. Especially important independent embodiments include those where M comprises at least one Group IVB element, for example Ti, Zr, or Hf and those where M comprises at least one Group V elements, for example V, Nb, or Ta. More preferred independent embodiments include those where M is Ti or Ta, especially structures wherein the empirical formula of the crystalline phase is Ti₂C, Ti₂N, Ti₃C₂, Ti₃N₂, Ti₄C₃, or Ti₄N₃, or Ta₃C₂, Ta₃N₂, Ta₄C₃ or Ta₄N₃, especially Ti₂C or Ta₄C₃.

The range of compositions available can be seen as extending even further when one considers that each M-atom position within the overall Mₙ₊₁Xₙ matrix can be represented by more than one element. That is, one or more type of M-atom can occupy each M-positions within the respective matrices. In certain exemplary non-limiting examples, these can be (M^{A}ₓM^{B}_{y})₂C or (M^{A}ₓM^{B}_{y})₂N, (M^{A}ₓM^{B}_{y})₃C₂ or (M^{A}ₓM^{B}_{y})₃C₂ , or (M^{A}ₓM^{B}_{y})₄C₃ or (M^{A}ₓM^{B}_{y})₄C₃ , where M^{A} and M^{B} are independently members of the same group, and x + y = 1. For example, in but one non-limiting example, such a composition can be (V_{1/2}Cr_{1/2})₃C₂. In the same way, one or more type of X-atom can occupy each X-position within the matrices, for example solid solutions of the formulae Mₙ₊₁(CₓN_{y})ₙ, or (M^{A}ₓM^{B}_{y})ₙ₊₁(CₓN_{y})ₙ.

In various embodiments, the composition's layer has first and second surfaces which are capable of being physically or chemically interrogated or modified. This feature distinguishes these compositions from sputtered matrices or so-called MAX phase compositions. While it may be possible to describe sputtered matrices or MAX phase compositions as containing two-dimensional arrays of crystal cells, in each case these are embedded within vertically integrated and practically bound to other layers within the respective matrices (e.g., in the case of sputtered matrices, to other neighboring sputtered layers or the substrate; in the case of MAX-phase compositions, to interleaved A-group element arrays), either by covalent, metallic, or lattice bonds, and which cannot be separately accessed. By contrast, in various embodiments of the present compositions, each layer has two available or accessible surfaces sandwiching each substantially two-dimensional array of crystal cells, each of which surfaces can be accessed for physical or chemical interrogation or modification.

It is important to note that, as prepared, the 2D MXene surfaces are *not* M-terminated (e.g., Ti-terminated), but primarily covered by oxide, OH, F groups or some combination thereof. For example in the case of a MXene of nominal composition Ti₃C₂ (e.g., derived from MAX phase Ti₃AlC₂) in fact is probably better represented by a formula such as Ti₃C₂(OH)ₓO_{y}F_{z}. However, since the exact surface composition may not be known with certainty and can vary from sample to sample, and for the sake of brevity, herein, such MXene compositions of this sort (e.g., such as derived from Ti₃AlC₂) may be referred to as Ti₃C₂(OH)ₓO_{y}F_{z}, Ti₃C₂, or Ti₃C₂Tₛ (where Tₛ refers to "surface terminations"), or more generally Mₙ₊₁XₙTₛ, the latter terms being useful to replace the more cumbersome former term, in a manner similar to the use of a general name "graphene oxide" for oxidized graphene, which has a variety of oxygen-containing groups.

Having said this, the ability to functionalize the surfaces of the layers to provide enrichment of a particular functional group provides a considerable synthetic and structural flexibility. Because of the arrangement of the M atoms within the Mₙ₊₁Xₙ framework, wherein each X is positioned within an octahedral array of M atoms, the "unfunctionalized" surface comprises largely M atoms. For example, in the absence of imperfections, a substantially planar array of crystal cells having an empirical formula Ti₃C₂ will provide or present external surfaces comprising a planar array of Ti atoms (see, e.g., **FIG. 3**). At the same time, owing to the chemical reactivity of Ti (or any of the M atoms), these surfaces will be coated with one or more organic or inorganic moieties, generally comprising heteroatoms or having heteroatom linking groups.

For example, in certain embodiments, at least one of the surfaces are coated with a coating comprising H, N, O, or S atoms, for example, a hydride, oxide, sub-oxide, nitride, sub-nitride, sulfide, or sub-sulfide. In preferred embodiments, the coating comprises a hydrated or anhydrous oxide, a sub-oxide, or some combination thereof. As used herein the terms "sub-oxide," "sub-nitride," or "sub-sulfide" is intended to connote a composition containing an amount reflecting a sub-stoichiometric or a mixed oxidation state of the M metal at the surface of oxide, nitride, or sulfide, respectively. For example, various forms of titania are known to exist as TiOₓ, where x can be less than 2. Accordingly, the surfaces may also contain oxides, nitrides, or sulfides in similar sub-stoichiometric or mixed oxidation state amounts.

In other embodiments, at least one surface is coated with a coating having a pendant moiety which is linked to the surface by an N, O, or S atom (e.g., an M-N, M-O, or M-S bond, respectively). Such surface coatings then may comprise at least one hydroxide, alkoxide, carboxylate, amine, amide, or thiol. These pendants may contain organic moieties, including saturated, unsaturated, and/or aromatic moieties. These organic moieties may optionally include heteroatoms, be linear or branched, and/or may contain one or more functional groups, for example amines and derivatives therefrom, (thio)carboxylic acids and derivatives therefrom, hydroxy or ether groups, and/or thiol groups. The moieties and/or optionally available functional groups may exist in their neutral or ionized state.

In other embodiments, the coating of at least one surface comprises at least one halide, for example F, Cl, Br, or I, preferably F. As used herein, the terms "halide" and, e.g., "fluoride" are intended to reflect the presence of metal-halogen or metal-fluorine bonds, respectively, without regard to the specific nominal charge on the halogen or fluorine.

The skilled artisan will be able to interchange the pendant groups by methods known in the art. Without the need for an exhaustive delineation of such methods, in one non-limiting example, a hydroxy or alkoxy surface may be prepared by providing an excess hydroxide or alkoxide so as to displace the halide from an initially presented M-halide surface or so as to hydrate or alkoxylate a metal oxide or sub-oxide surface. Similarly, an originally presented M-hydroxide surface may be converted to oxide or sub-oxide surface by application of heat or other dehydrating conditions. Nitrogen and sulfur surfaces may be analogously interconverted by methods known in the art for making such conversions. Similarly, hydrides may be prepared by exposing precursors to reducing conditions, either electrolytically or by contacting with reducing agents such as hydrides (e.g., NaBH₄), hydrogen gas, or ammonia.

In certain embodiments, the compositions may be electrically conducting or semiconducting.

In certain embodiments, the compositions comprise at least one individual layer having first and second surfaces, each layer comprising a substantially two-dimensional array of crystal cells having an empirical formula Ti₃C₂ , with at least one surface coated with a coating comprising a hydroxide, an oxide, a sub-oxide, or a combination thereof, and so optionally represented as Ti₃C₂Tₛ. In other embodiments, the coating comprises fluorine or fluoride.

In other embodiments, the crystalline composition comprises at least one individual layer having first and second surfaces, each layer comprising a substantially two-dimensional array of crystal cells having an empirical formula Ta₄C₃, with at least one surface coated with a coating comprising a hydroxide, an oxide, a sub-oxide, or a combination thereof, and so represented as Ta₄C₃Tₛ.

In still other embodiments, the crystalline composition comprises at least one individual layer having first and second surfaces, each layer comprising a substantially two-dimensional array of crystal cells having an empirical formula (CrₓVₓ)₃C₂ (including where x = y = ½) with at least one surface coated with a coating comprising a hydroxide, an oxide, a sub-oxide, or a combination thereof.

As described above, certain additional embodiments provide MXene compositions which exhibit conductive or semi-conductive behavior, as well as those electronic devices (e.g., transistors, where the use of graphene and MoS₂ has been successfully demonstrated) which incorporate such compositions so as to take advantage of this property. Further, it is shown that variations in the nature of the surface coating effects that behavior, as shown by density functional theory (DFT) calculations (methods described in Example 1, below) **(****FIG. 5(g)****).** For example, the calculated band structure of a single Ti₃C₂ layer resembles a typical semi-metal with a finite density of states at the Fermi level. Indeed, the resistivity of the thin disk shown in **FIG. 4(e)** is estimated to about an order of magnitude higher than the same disc made with unreacted Ti₂AlC powders, which translates to a resistivity of ca. 0.03 uΩm. By contrast, when terminated with OH and F groups, the band structure has a semiconducting character with a clear separation between valence and conduction bands by 0.05 eV and 0.1 eV, respectively **(****FIG. 5(g)**), thereby supporting the conclusion that it is possible to tune the electronic structure of exfoliated MAX layers - or MXene compositions - by varying the functional groups. Such further modifications of the functional groups themselves may provide additional flexibility in this regard.

In certain embodiments, MXene films or papers are sufficiently thin as to be transparent, while maintaining surface conductivity. Optical transparencies as high as 90% have been obtained, though in certain embodiments, such MXene films or papers may exhibit optical transparencies (i.e., at least one wavelength in a range of about 250 nm to about 850 nm) in a range of from about 0% to about 95% or higher, from about 50% to about 95%, from about 70% to about 95%, or from about 70% to about 90%. Such thin films may be prepared by delaminating epitaxially grown thin films, either as-prepared or intercalated with one or more materials as described herein.

Additional embodiments provide for the use or incorporation of MXene compositions into other materials, or the incorporation of other materials within them. For example, various embodiments provide polymer composites into which a MXene composition is incorporated. More particularly, further embodiments provide polymer composite compositions wherein the MXene compositions comprises between amounts in the range of about 0.1 wt% to about 50 wt%, relative to the combined weight of the polymer and MXene composition. Still other embodiments provide that the MXene composition is present in a range whose lower amount is about 0.1, about 1, about 2, about 5, or about 10 wt% and the upper amount is about 50 wt%, about 40 wt%, about 30 wt%, about 20 wt%, about 10 wt%, or about 5 wt%, relative to the combined weight of the polymer and the MXene composition comprising a polymer.

The polymer composite may be comprised of organic polymers, more specifically thermoset or thermoplastic polymers or polymer resins, elastomers, or mixtures thereof. Various embodiments include those wherein the polymer or polymer resin contains an aromatic or heteroaromatic moiety, for example, phenyl, biphenyl, pyridinyl, bipyridinyl, naphthyl, pyrimidinyl, including derivative amides or esters of terephthalic acid or naphthalic acid. Other embodiments provide that the polymer or polymer resin comprises polyester, polyamide, polyethylene, polypropylene, polyethylenenaphthalate (PEN), polyethylene terephthalate (PET), polybutylene terephthalate (PBT), polyether etherketone (PEEK), polyamide, polyaryletherketone (PAEK), polyethersulfone (PES), polyethylenenimine (PEI), poly (p-phenylene sulfide) (PPS), polyvinyl chloride (PVC), fluorinated or perfluorinated polymer (such as a polytetrafluoroethylene (PTFE or TEFLON®), polyvinylidene difluoride (PVDF), a polyvinyl fluoride (PVF or TEDLAR®)) (TEFLON® and TEDLAR® are registered trademarks of the E.I. DuPont de Nemours Company, of Wilmington, Delaware)

It is believed that the planar nature of MXene layers may be well suited to organizing themselves in those anisotropic polymers, for example having planar moieties, e.g., aromatic moieties, especially when (but not only when) these planar organic moieties are directionally oriented to be parallel in a polymer composite composition. Such embodiments include the inclusion of MXene compositions into liquid crystal polymers. Moreover, the ability to produce MXene compositions having both hydrophobic and hydrophilic pendants provides for compatibility with a wide-ranging variety of polymer materials.

Additional embodiments described here provide polymer composites, including those wherein the polymer composite is in a form having a planar configuration - for example, a film, sheet, or ribbon -- comprising a MXene layer or multilayer composition. Still further embodiments provide such polymer composites wherein the two-dimensional crystal layers of the MXene materials are aligned or substantially aligned with the plane of a polymer composite film, sheet, or ribbon, especially when the organic polymers are oriented in the plane of that film, sheet, or ribbon.

The large elastic moduli predicted by *ab initio* simulation, and the possibility of varying their surface chemistries (beyond those exemplified herein, which are terminated by hydroxyl and/or fluorine groups) render these nanosheets attractive as polymer composite fillers. For example, the elastic modulus of a single, exfoliated Ti₃C₂(OH)₂ layer, along the basal plane, is calculated to be around 300 GPa, which is within the typical range of transition metal carbides and significantly higher than most oxides and clays (*see, e.g.,* P. H. Nadeau, Applied Clay Science 1987, 2, 83). And while the 300 GPa value is lower than that of graphene (*e.g*., as described in S. Stankovich, et al., Nature 2006, 442, 282, the ability to match the character of the MXene layered materials with that of the polymer matrix, as described above, is expected to ensure better bonding to and better dispersion in polymer matrices when these MXene layers are to be used as reinforcements in polymer composites. It is also important to note here that the functionalized Ti₃C₂ sheets described herein were much more stable than graphene sheets under the 200 kV electron beam in the TEM.

Accordingly, still further embodiments provide that the MXene composition-filled composite polymers, especially when these polymer composites have a planar configuration, such as that of film, sheet, or ribbon, especially an oriented film, sheet, or ribbon, exhibit a flexural strength (bending rigidity) and/or stiffness than that of the corresponding film, sheet, or ribbon of the same polymer without the MXene composition. In some embodiments, this greater flexural strength and/or stiffness is independently at least 5%, at least 10%, or at least 25% higher than the flexural strength or toughness than that exhibited by an otherwise equivalent, but unfilled material.

Thus far, the compositions have been described in terms of having individual layers having first and second surfaces, each layer comprising a substantially two-dimensional array of crystal cells. However, additional embodiments provide for stacked assemblies of at least two layers having first and second surfaces, each layer comprising a substantially two-dimensional array of crystal cells, each crystal cell having the empirical formula of Mₙ₊₁Xₙ, such that each X is positioned within an octahedral array of M; wherein M is a Group IIIB, IVB, VB, or VIB metal or Mn; each X is C or N; and n = 1, 2, or 3; and wherein the layers are characterized as having an average surface area and interlayer distance.

In various embodiments of these stacked assemblies, each layer may retain the characteristics as described above, but be held in place or edge-wise connected such that the assembly has up to about 50 layers of crystal layers. In various embodiments, these number of crystal layers in these assemblies may be described as having a range having a lower end of 2, about 5, about 10, about 15, or about 20 and an upper range of about 50, about 40, about 30, about 25, about 20, and about 10, with exemplary ranges of 2 to about 50, 2 to about 25, 2 to about 20, about 5 to about 50, about 5 to about 25, about 5 to about 20, about 10 to about 50, about 10 to about 25, about 10 to about 20, about 10 to about 15, about 15 to about 20.

In various embodiments, the composite layers characterized as having an average surface area. While the bounds of these areas are not necessarily limited to any particular values, in certain preferred embodiments, the average surface or planar area is defined by a range of areas, with individual embodiments having a lower range value of about 50 nm², about 100 nm², about 250 nm², about 500 nm², , or about 1000 nm², and having an upper range value of about 10,000 nm², about 5000 nm², about 2500 nm², about 1000 nm², about 500 nm², about 250 nm², or about 100 nm², with exemplary ranges of about 100 nm² to about 2500 nm², of about 250 nm² to about 2500 nm², of about 500 nm² to about 1500 nm², of about 500 nm² to about 1000 nm², 50 nm² to about 250 nm², or about 750 nm² to about 1000 nm².

In other preferred embodiments, the average surface or planar area is defined by a range of areas, with individual embodiments having a lower range value of about 5 µm², about 10 µm², about 25 µm², about 50 µm², about 100 µm², about 250 µm², about 500 µm², or about 1000 µm² and having an upper range value of about 100,000 µm², 10,000 µm² , about 1000 µm², about 500 µm², about 250 µm², about 100 µm², about 50 µm², about 25 µm², or about 10 µm², with exemplary ranges of about 10 µm² to about 250 µm² , of about 25 µm² to about 250 µm², of about 50 µm ² to about 150 µm² , of about 50 µm² to about 100 µm², 5 µm ² to about 25 µm² , or about 75 µm² to about 125 µm².

While the surface of these composite layer may be of any shape, it is convenient to describe such shapes as having a major and minor planar dimension (or x-axis and y-axis dimensions, using the envisioned x-y plane as described above) . For example, if a quadrilateral or pseudo-quadrilateral shape, the major and minor dimension is the length and width dimensions. In preferred embodiments, the ratio of the lengths of the major and minor axes is in the range of about 1 to about 10 (1:10) to about 10 to about 1 (10:1), about 1 to about 5 (1:5) to about 5 to about 1 (5:1), more preferably about 1 to about 3 (1:3) to about 3 to about 1 (3:1), or about 1 to about 2 (1:2) to about 2 to about 1 (2:1).

Additionally, in various embodiments, the interlayer distances (i.e., the distances between the composite crystal layers) in these stacked assemblies is in the range of about 0.2 nm to about 1 nm, preferably in the range of about 0.3 nm to about 0.5 nm. When prepared by the methods described below (i.e., removing the labile A-phase elements from MAX phase materials, see below), these interlayer distances may be consistent with the atomic radii of the removed elements. For example, the atomic diameter of Al is about 0.25 nm and that of Sn about 0.3 nm.

Certain embodiments described here provide stacked assemblies which are capable of intercalating atoms and/or ions between at least some of the layers of two-dimensional crystal layers. Such spontaneous intercalation of cations from aqueous solutions was not theoretically or previously demonstrated. For example, these atoms and/or ions can be metal or metalloid atoms or ions, including alkali, alkaline earth, and transition metals.

Other embodiments described here provide stacked assemblies which are capable of being intercalated or actually are intercalated by small molecules or salts thereof between at least some of the layers of two-dimensional crystal layers. In this regard, the term "small molecules," describes molecules comprising C, H, N, O, or S, and having molecular weights less than about 250 daltons. These molecules or salts are preferably, but not necessarily, polar. These molecules or salts are preferably, but not necessarily, aprotic. In some embodiments, the stacked assemblies are capable of being intercalated or actually are intercalated by molecules or salts thereof, said molecules or salt being those which are known to intercalate into kaolinite between at least some of the layers of two-dimensional crystal layers. In this regard, they may be described to as "kaolinitic intercalators." Without being bound to any particular theory, it appears that these intercalating chemicals are capable of stably interacting with the surface functionalities of the individual layers of the MX-ene materials. Exemplary small molecules or kaolinitic intercalators include hydrazine, hydrazine monohydrate, DMSO, urea, and N, N-dimethylformamide. Ammonium hydroxide has also been demonstrated to intercalate into these stacked assemblies. N-methylformamide (NMF) and 1-methyl-2-pyrrolidone (NMP) are also known to intercalate into kaolinite matrices

**Example 14** describes some exemplary, non-limiting methods of intercalating these types of chemicals into the MX-ene matrices. It is noted that for at least some of these chemicals, the intercalation is reversible - i.e., they can be inserted and removed by varying processing conditions, including simple exposure to the potential intercalant and variations in temperature, or both. It should also be apparent that introducing a first intercalated chemical into a given MX-ene matrix, may provide an opportunity to substitute it by a second chemical or chemicals, perhaps larger organic molecules, either by co- or post-intercalation, thereby providing a route to a broader class of intercalated compositions, similar to intercalated kaolinite derivatives. For example, pyrrolidinium halide and benzamide intercalation compounds of kaolinite are known to be available from DMSO intercalated kaolinite, and similar substitutions may be available for analogous compounds comprising these MX-ene materials. Some specific embodiments described in **Example 14** are part of the present invention.

In addition to the compositions of the MXene materials, various embodiments provide for the preparation of such materials. Certain embodiments provide methods of preparing compositions comprising: (a) removing substantially all of the A atoms from a MAX-phase composition having an empirical formula of Mₙ₊₁AXₙ; wherein M is an early transition metal or a mixture thereof, wherein A is a so-called A-group element (typically described, see below, as including Al, Si, P, S, Ga, Ge, As, Cd, In, Sn, Tl, and Pb); wherein X is C or N, or a combination thereof; and wherein n = 1, 2, or 3 so as to provide a free standing composition comprising a framework of a substantially two-dimensional composite crystal layer having first and second surfaces.

MAX phase compositions are generally recognized as comprising layered, hexagonal carbides and nitrides have the general formula: Mₙ₊₁AXₙ, (MAX) where n = 1 to 3, in which M is typically described as an early transition metal (comprising a Group IIIB, IVB, VB, or VIB metal, or Mn), A is described as an A-group (mostly IIIA and IVA, or groups 13 and 14) element and X is either carbon and/or nitrogen. *See, e.g.,* M.W. Barsoum, et al., "Synthesis and Characterization of a Remarkable Ceramic: Ti3SiC2," J. Amer. Ceramics. Soc., 79, 1953-1956 (1996); M. W. Barsoum, "The MN+1AXN Phases: A New Class of Solids: Thermodynamically Stable Nanolaminates," Progress in Solid State Chemistry, 28, 201-281 (2000). While Ti₃AlC₂ is among the most widely studied of these materials, more than 60 MAX phases are currently known to exist and are useful in the present invention. While not intending to be limiting, representative examples of MAX phase materials useful in the present invention include: (211) Ti₂CdC, Sc₂InC, Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂AlC, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂AlC, Ta₂GaC, Hf₂SnC, Hf₂PbC, Hf₂SnN, Hf₂SC; (312) Ti₃AlC₂, V₃AlC₂, Ti₃SiC₂, Ti₃GeC₂, Ti₃SnC₂, Ta₃AlC₂, and (413) Ti₄AlN₃, V₄AlC₃, Ti₄GaC₃, Ti₄SiC₃, Ti₄GeC₃, Nb₄AlC₃, and Ta₄AlC₃. Solid solutions of these materials can also be used as described herein (e.g., see Example 4).

MAX phase materials are themselves known to exist as laminated structures with anisotropic properties. These materials are layered hexagonal (space group P6_{3/}mmc), with two formula units per unit cell **(****FIG. 1****).** Near close-packed M-layers are interleaved with pure A-group element layers, with the X-atoms filling the octahedral sites between the former.

Within the MAX phase structure, the Mₙ₊₁Xₙ layers are chemically quite stable, possibly owing to the strength of the M-X bond. By comparison, the A-group atoms are the most reactive species, reflective of their relatively weak binding. For example, heating Ti₃SiC₂ in a C-rich atmosphere or heating in molten cryolite or molten aluminum is known to result in the loss of Si and the formation of TiCₓ. In the case of cryolite, the vacancies that form lead to the formation of a partially ordered cubic TiC_{0.67} phase. In both cases, the high temperatures lead to a structural transformation from a hexagonal to a cubic lattice and a partial loss of layering. In some cases, such as Ti₂InC, simply heating in vacuum at ca. 800°C, results in loss of the A-group element and TiCₓ formation. Removing of both the M and A elements from MAX structure by high temperature chlorination results in a porous carbon known as carbide derived carbon with useful and unique properties.

By contrast, the present methods surprisingly provide for the preparation of compositions comprising layers or stacked assemblies of at least one layer having first and second surfaces, each layer comprising a substantially two-dimensional array of crystal cells, each crystal cell deriving from the Mₙ₊₁Xₙ layers of MAX phase compositions. These compositions are capable of free-standing or can be organized into stacked assemblies of coated crystal layers.

As used herein, the term "removing substantially all of the A atoms from a MAX-phase composition" connotes embodiments wherein at least 50 atomic % of the A atoms are removed from a finally recovered sample, relative to the original MAX phase composition. In other more preferred independent embodiments, more than about 60 atomic %, more than about 70 atomic %, more than about 80 atomic %, more than about 90 atomic %, more than about 95 atomic %, more than about 98 atomic %, and more than about 99 atomic % of the A atoms are removed from a finally recovered sample, relative to the original MAX phase composition.

Certain embodiments provide a process for removing these A atoms comprising treatment with an acid, preferably a strong acid capable of reacting with the A atoms. Such acids may be organic or inorganic acids, and may be applied in the gas or liquid phase, provided the resulting A-atom product can be removed from the lattice. In this regard, strong acids which include fluorine atoms appear to be especially preferred. Aqueous hydrofluoric acid is among those acids which appear especially useful. Aqueous ammonium hydrogen fluoride (NH₄F.HF) is another, more safely handled, acid which may be useful in effecting removal of the A atom. Other alkali metal bifluoride salts (i.e., QHF₂, where Q is Li, Na, or K) may also be useful for this purpose. Indeed, even conditions which generate aqueous HF *in situ* (for example, using alkali metal fluoride salts (e.g., NaF) in the presence of mineral acids, such as HCl or HNO₃, have been shown to provide mixtures capable of effectively removing the A atom from MAX phase materials. The skilled artisan will also appreciate that any reactant known to react preferentially with the A atoms of a given MAX phase composition, relative to the Mₙ₊₁Xₙ may also be useful, for example selective chelants.

The extraction of the A group layers may be done at room, or even moderate, temperature, for example in the range of about 20°C to about 800°C, preferably in temperature ranges wherein the lower temperature is about 20°C, about 25°C, about 30°C, about 40°C, about 50°C, about 60°C, about 80°C, about 100°C , about 200°C, or about 300°C , and wherein the upper temperature is about 600°C, about 500°C, about 400°C, about 300°C, about 250°C, about 200°C, about 150°C, about 100°C, about 80°C, or about 60°C. Exemplary examples of ranges include temperatures in the range of about 20°C to about 100°C, about 20°C to about 60°C, or about 30°C to about 60°C. The extractions may be conducted using liquid or gas phase extraction methods. Gas phase reactions are generally to be done at the higher temperatures.

In further embodiments, the chemically treated materials are subjected to sonication, either using ultrasonic or mega sonic energy sources. This sonication may be applied during or after the chemical treatment.

One embodiment of the chemical exfoliation process for one representative material is diagrammatically illustrated in **FIG. 3****,** and described further below. In this example, the treatment of Ti₃AlC₂ powders for 2 h in aqueous HF resulted in the formation of exfoliated 2-D Ti₃C₂ layers. The term "exfoliated" refers to a process of delaminating the individual (or multiple individual layers) from the stacked assemblies (see, e.g., the second step illustrated in FIG. 3). The exposed Ti surfaces appear to be terminated by OH and/or F (see Examples below). While not intending to be bound by the correctness of any single theory or mechanism, based on the experimental information provided below, it appears that the following simplified reactions occur when Ti₃AlC₂ is immersed in aqueous HF:

Ti₃AlC₂ + 3HF = AlF₃ + 3/2 H₂ + Ti₃C₂ (1)

Ti₃C₂ + 2H₂O = Ti₃C₂(OH)₂ + H₂ (2)

Ti₃C₂ + 2HF = Ti₃C₂F₂ + H₂ (3)

Reaction (1) appears to be a necessary step, at least to the extent that it provides for the extraction of AlF₃ in some form (e.g., perhaps some soluble derivative, such as H₃AlF₆), followed or accompanied by reaction (2) and/or (3). Evidence consistent with the aforementioned reactions and that they result in the exfoliation of 2-D Ti₃C₂ layers, with OH and/or F surface groups is presented below. Reactions (2) and (3) are simplified in that they assume the terminations are OH or F, respectively, when in fact they may be a combination of both.

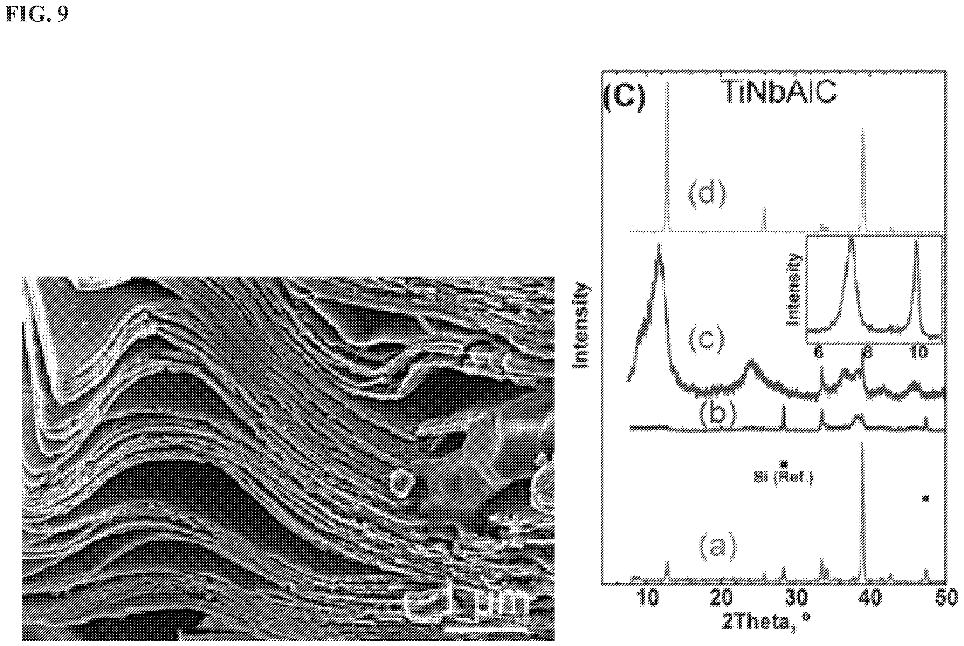

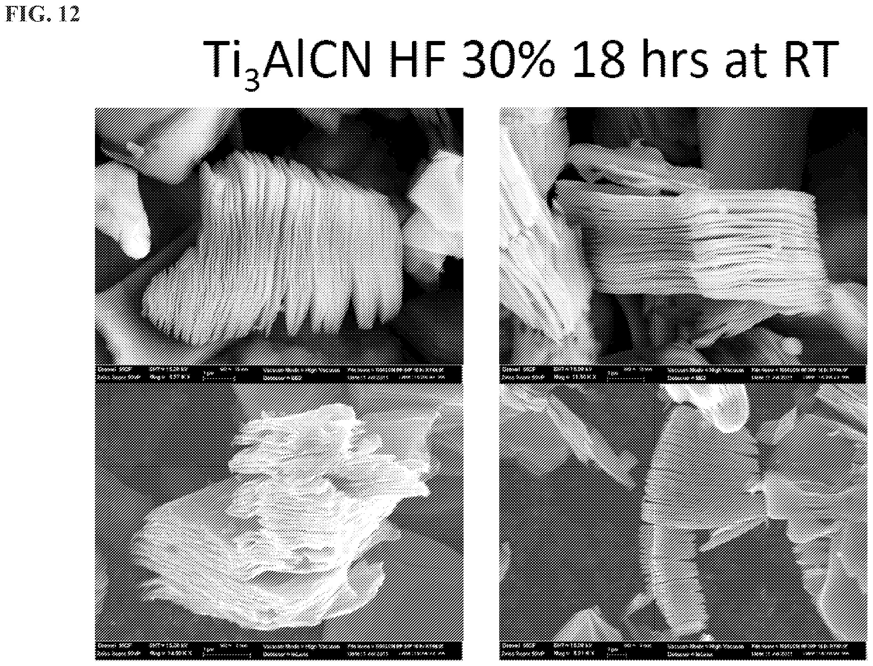

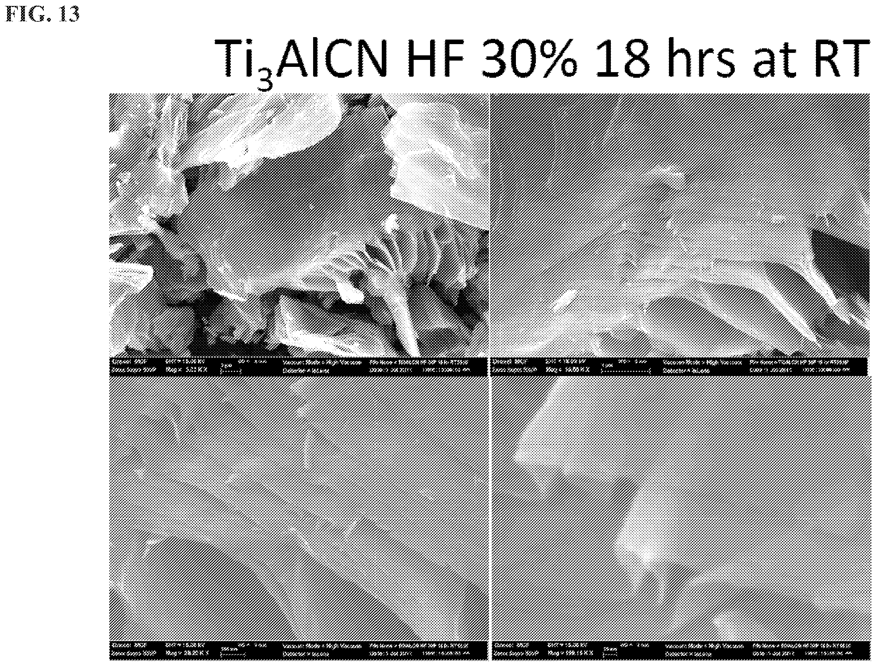

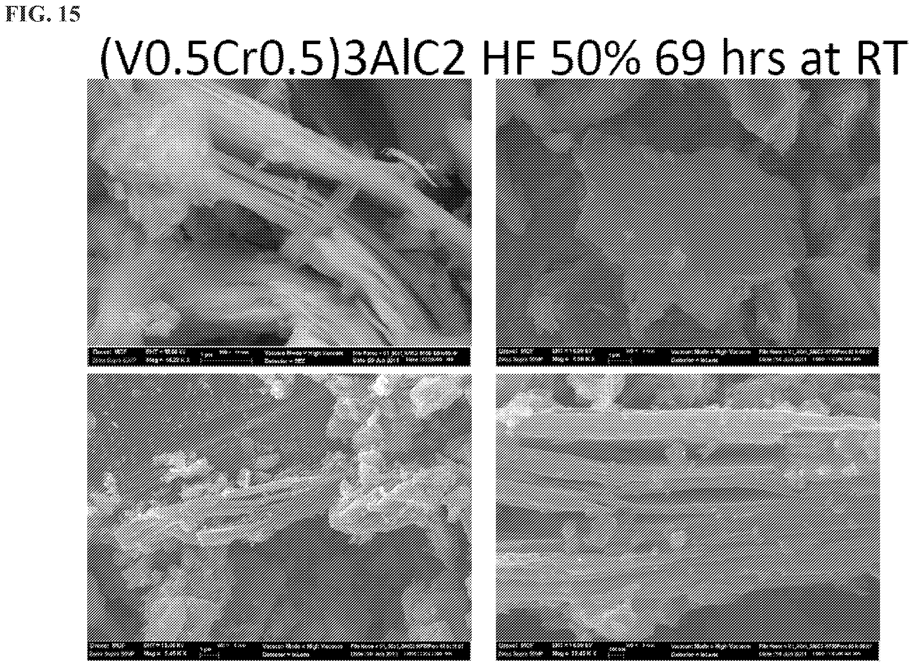

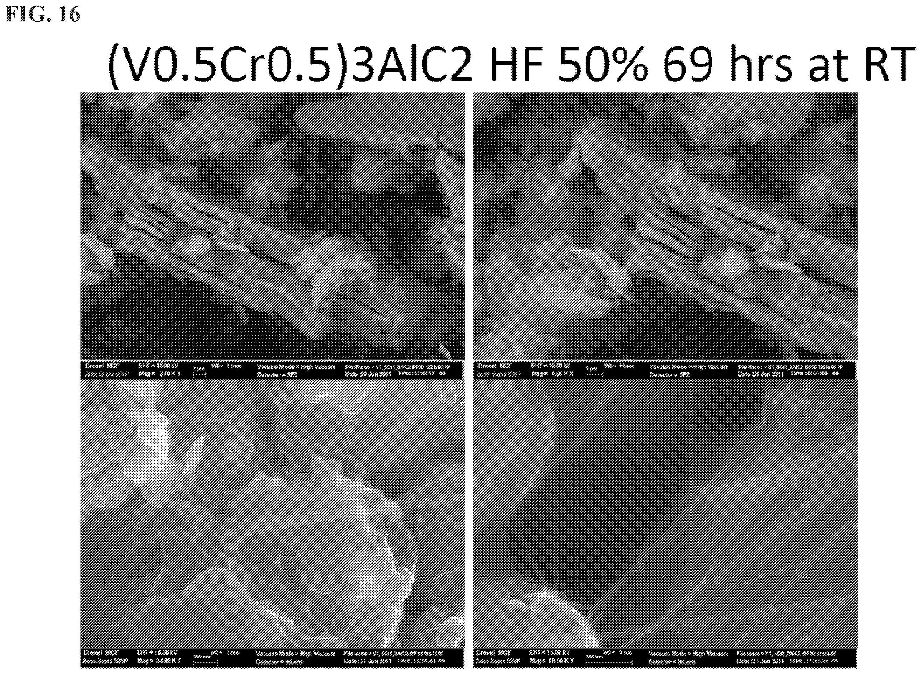

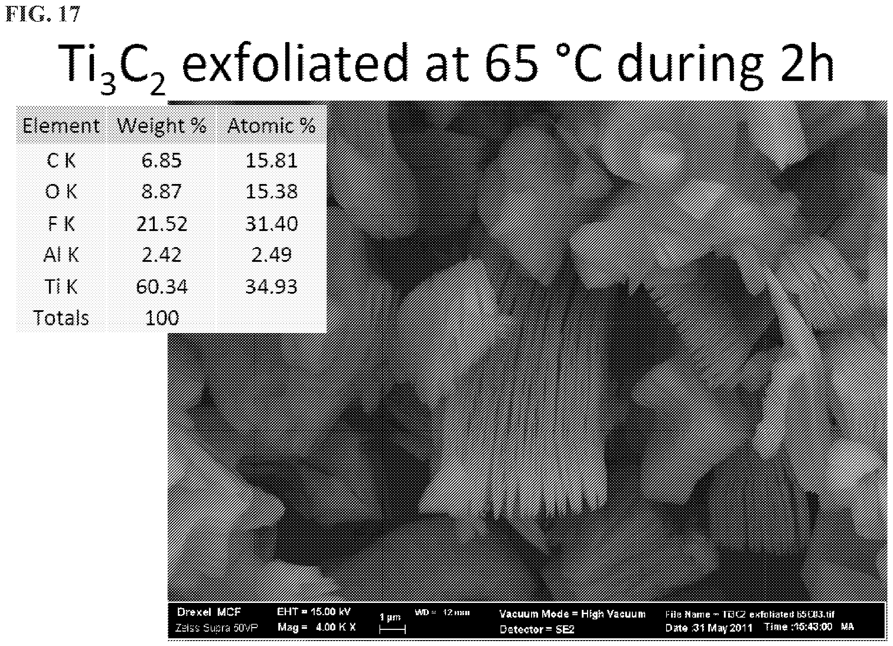

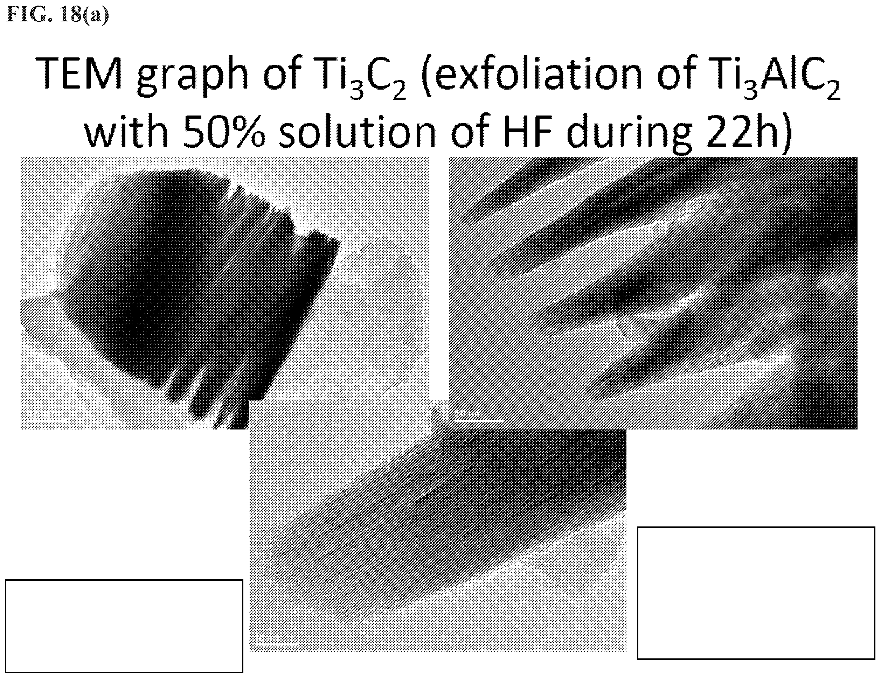

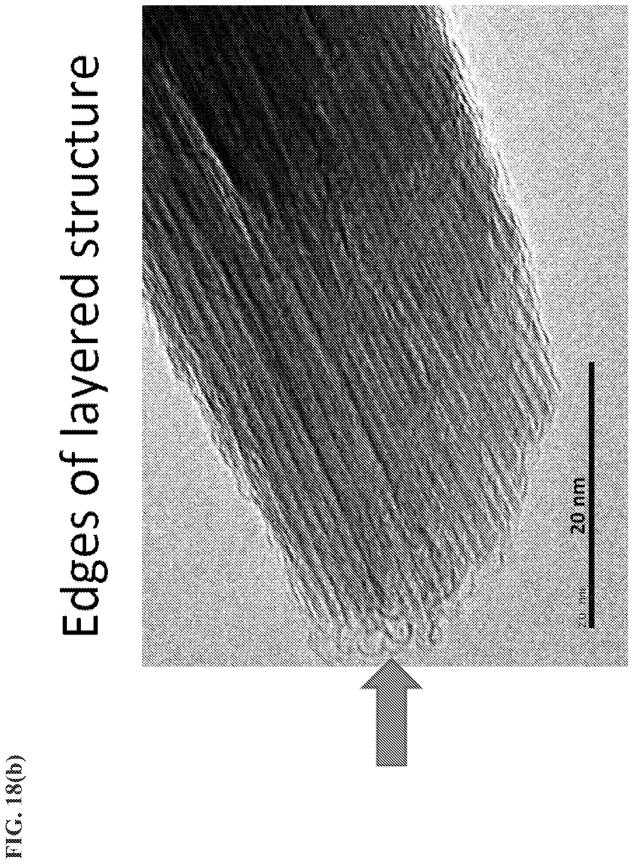

Non-limiting examples of MXene compositions prepared by chemical exfoliation are illustrated in **FIGs. 9-18****.**

In other embodiments, the exfoliation can be accomplished electrochemically. In various embodiments, MAX phase materials are selectively exfoliated to form the corresponding MXene by the application of potentiostatic or galvanostatic polarization. See Example 9, below.

It should also be recognized that, in addition to those embodiments described for the compositions provided above, other embodiments provide for compositions provided by the methods of preparation described herein. For example, those composition obtained from subjecting a MAX phase material to a chemical exfoliation process, said exfoliation process comprising treatment with aqueous HF and sonication, wherein a substantial portion of the A atoms are removed.

### EXAMPLES

The following Examples are provided to illustrate some of the concepts described within this disclosure. While each Example is considered to provide specific individual embodiments of composition, methods of preparation and use, none of the Examples should be considered to limit the more general embodiments described herein.

In the following examples, efforts have been made to ensure accuracy with respect to numbers used (e.g. amounts, temperature, etc.) but some experimental error and deviation should be accounted for. Unless indicated otherwise, temperature is in degrees C, pressure is at or near atmospheric.

### Example 1: Methods and Materials.

Powder of TisAlC₂ was prepared by ball-milling Ti₂AlC ( > 92 wt.% 3-ONE-2, Voorhees, NJ) and TiC (99% Johnson Matthey Electronic, NY) powders in a 1:1 molar ratio for 24 h using zirconia balls. The mixture was heated to 1350°C for 2 h under argon, Ar. The resulting loosely held compact was crushed in a mortar and pestle. Roughly 10 g of powders are then immersed in ≈ 100 ml of a 50 % concentrated hydrofluoric acid, HF, (Fisher Scientific, Fair Lawn, NJ) solution at room temperature for 2 h. The resulting suspension was then washed several times using de-ionized water and centrifuged to separate the powders. In some cases, to align the flakes and produce free-standing discs, the treated powders were cold pressed at a load corresponding to a stress of about 1 GPa in a steel die.

X-ray diffraction (XRD) patterns were obtained with a powder diffractometer (Siemens D500, Germany) using Cu K_{α} radiation, and a step scan of 0.02° and 1 s per step. Si powder was added to some samples as an internal standard. A scanning electron microscope, (SEM, Zeiss Supra 50VP, Germany) was used to obtain high magnification images of the treated powders. Transmission electron microscopes, TEMs, (JEOL JEM-2100F and JEM 2100, Japan; FEI, Tecnai G2 TF20UT FEG, Netherlands) operating at 200 kV were used to characterize the exfoliated powders. Chemical analysis in the TEM was carried out using an ultra-thin window X-ray energy dispersive spectrometer, EDAX (EDAX, Mahwah, NJ). The TEM samples were prepared by deposition of the flakes - from an isopropanol suspension - on a lacey-200 mesh carbon-coated copper grid. Raman spectroscopy of the cold pressed samples was carried out on a microspectrometer (inVia, Renishaw plc, Gloucestershire, UK) using an Ar ion laser (514.5 nm) and a grating with 1800 lines/mm. This corresponds to a spectral resolution of 1.9 cm⁻¹ and a spot size of 0.7 µm in the focal plane. X-ray photoelectron spectroscopy, XPS, (PHI 5000, ULVAC-PHI, Inc., Japan) was used to analyze the surfaces of samples before and after exfoliation.

Theoretical calculations were performed by density functional theory (DFT) using the plane-wave pseudo-potential approach, with ultrasoft pseudopotentials and Perdew Burke Ernzerhof (PBE) exchange - Wu-Cohen (WC) correlation functional, as implemented in the CASTEP code in Material Studio software (Version 4.5). A 8x8x1 Monkhorst-Pack grid and planewave basis set cutoff of 500 eV were used for the calculations. Exfoliation was modeled by first removing Al atoms from the Ti₃AlC₂ lattice. Exposed Ti atoms located on the bottom and top of the remaining Ti₃C₂ layers were saturated by OH (FIG. 3(b)) or F groups followed by full geometry optimization until all components of the residual forces became less than 0.01 eV/Å. Equilibrium structures for exfoliated layers were determined by separating single Ti₃C₂ layers by a 1.2 nm thick vacuum space in a periodic supercell followed by the aforementioned full geometry optimization. Band structures of the optimized materials were calculated using a k point separation of 0.015Å⁻¹. The elastic properties of the 2-D structures were calculated by subjecting the optimized structure to various strains and calculating the resulting second derivatives of the energy density.

### Example 2: Experimental Characterization of Ti₃C₂(OH)₂ and Ti₃C₂(F)₂.

XRD spectra of the initial Ti₂AlC-TiC mixture after heating to 1350°C for 2 h resulted in peaks that corresponded mainly to Ti₃AlC₂ (bottom curve in **FIG. 4(a)**). When the Ti₃AlC₂ powders were placed into the HF solution, bubbles, believed to be H₂, were observed suggesting a chemical reaction. Ultrasonication of the reaction products in methanol for 300 s resulted in significant weakening of the peaks and the appearance of an amorphous broad band around 24° (top spectrum in **FIG. 4(a)**). In other words, exfoliation leads to a loss of diffraction signal in the out-of-plane direction, and the non-planar shape of the nanosheets results in broadening of peaks corresponding to in-plane diffraction. When the same powders were cold pressed at 1 GPa, into free-standing, 300 µm thick and 25 mm diameter discs **(****FIG. 4(e)**), their XRD showed that most of the non-basal plane peaks of Ti₃AlC₂ - most notably the most intense peak at ≈ 39° - disappear (curve labeled "HF etched" in **FIG. 4(a)**). On the other hand, the (001) peaks, such as the (002), (004) and (010), broadened, lost intensity, and shifted to lower angles compared to their location before treatment. Using the Scherrer formula, as described in B. D. Cullity, Elements of X-ray diffraction, Addison-Wesley 1978, the average particle dimension in the [0001] direction after treatment is estimated to be 11±3nm, which corresponds to roughly ten Ti₃C₂(OH)₂ layers. To identify the peaks we simulated XRD patterns of hydroxylated, viz. Ti₃C₂(OH)₂, (curve labeled "Ti₃C₂(OH)₂" in **FIG. 4(a)**) and fluorinated, Ti₃C₂F₂, structures (curved labeled as such in **FIG. 4(a)**). Clearly, both were in good agreement with the XRD patterns of the pressed sample (curve labeled "HF etched" in **FIG. 4(a)**), the agreement was better with the former. The disappearance of the most intense diffraction peak of Ti₃AlC₂ at 39° and the good agreement between the simulated XRD spectra for Ti₃C₂(OH)₂ and the experimental results provides strong evidence of the formation of the latter. The presence of OH groups after treatment was confirmed by FTIR.

Further DFT geometry optimization of the hydroxylated (FIG. 5(f)) and fluorinated structure resulted in 5% and 16% expansion of the original Ti₃AlC₂ lattice, respectively, as observed. If Al were simply removed, and not replaced by functional groups, the DFT optimization caused the structure to contract by 19 %, which is not observed. The increase of the c-lattice parameters upon reaction (FIG. 4(a)) is thus strong evidence for the validity of reactions 2, 3.

Raman spectra of Ti₃AlC₂, before and after HF treatment, are shown in FIG. 4(b). Peaks II, III, and IV vanished after treatment, while peaks VI and VII, merged, broadened and downshifted. Such downshifting has been observed in Raman spectra of very thin layers of inorganic layered compounds, and is characteristic of such materials. *See, e.g.,* C. N. R. Rao, et al., Science and Technology of Advanced Materials 2010, 11, 054502.
The line broadening, and the spectral shifts in the Raman spectra are consistent with exfoliation and are in agreement with the broadened XRD profiles. In analogy with Ti₃SiC₂ (*see* J. Spanier, S. Gupta, M. Amer, M. W. Barsoum, Physical Review B 2005, 71, 012103), peaks I to III in FIG. 4(b) can be assigned to Al-Ti vibrations, while peaks V and VI involve only Ti-C vibrations. The fact that only the latter two exist after etching confirms both the mode assignments, but more importantly the loss of A1 from the structure. Note that peaks V and VI are combined, broadened and downshifted after reaction.

The Ti 2p XPS spectra, before and after treatment, are shown in FIG. 4(c). The C ls and Ti 2p peaks before treatment match previous work on Ti₃AlC₂. See, e.g., S. Myhra, et al., Journal of Physics and Chemistry of Solids 2001, 62, 811. The presence of Ti-C and Ti-O bonds was evident from both spectra, indicating the formation of Ti₃C₂(OH)₂ after treatment. The Al and F peaks (not shown) were also observed and their concentrations were calculated to be around 3 at.% and 12 at.%, respectively. Aluminum fluoride (AlF₃) - a reaction product, see below - can probably account for most of the F signal seen in the spectra. The O 1s main signal (not shown at ~530.3 cm^{- 1}) suggest the presence of OH group. *See, e.g.,* M. Schmidt, S. G. Steinemann, Fresenius' Journal of Analytical Chemistry 1991, 341, 412.

A SEM image of a ≈ 1500 µm³ Ti₃AlC₂ particle (FIG. 4(d)) shows how the basal planes fan out and spread apart as a result of the HF treatment. EDAX of the particles showed them to be comprised of Ti, C, O and F, with little, or no, Al. This implies that the Al layers were replaced by oxygen (i.e. OH) and/or F. Note that the exfoliated particles maintained the pseudo-ductility of Ti₃AlC₂ and could be easily cold press into freestanding disks (FIG. 4(e)). This property can prove crucial in some potential applications, such as anodes for Li-ion batteries, as described above.

TEM analysis of exfoliated sheets (FIG. 5(a), (b)) shows them to be quite thin and transparent to electrons since the carbon grid is clearly seen below them. This fact strongly suggests a very thin foil, especially considering the high atomic number of Ti. The corresponding selected area diffraction, SAD (inset in FIG. 5(b)) shows the hexagonal symmetry of the basal planes. EDAX of the same flake showed the presence of Ti, C, O, and F. FIG. 5(c), (d) show cross-sections of exfoliated single- and double-layer MXene sheets. FIG. 5(e), (f) show high-resolution TEM micrographs and a simulated structure of two adjacent OH-terminated Ti₃C₂ sheets, respectively. The experimentally observed interplanar distances and angles are found to be in good agreement with the calculated structure. FIG. 6(a), (b) show stacked multilayer MXene sheets. The exfoliated layers can apparently also be rolled into conical shapes (FIG. 6(d)); some are bent to radii of < 20 nm (FIG. 6(e)). Note that if A1 atoms had been replaced by C atoms, the concomitant formation of strong Ti-C bonds - as when, for example, Ti₃SiC₂ reacts with cryolite at 900 °C- exfoliation would not have been possible. It follows that the reaction must have resulted in a solid in which the Ti-Al bonds are replaced by much weaker hydrogen or van der Waals bonds. This comment notwithstanding, the EDAX results consistently show the presence of F in the reaction products implying that, as noted above, the terminations are most likely a mixture of F and OH. The presence of up to 12 at.% F has also been confirmed using XPS. In the latter case, however, some of it could originate from AlF₃ residue in the sample.

Lastly, it is instructive to point out the similarities between MXene and graphene such as,
(i) the exfoliation of 2-D Ti₃C₂ layers (FIG. 6(a) and (b)) into multilayer sheets that resemble exfoliated graphite, see L. M. Viculis, et al., Journal of Materials Chemistry 2005, 15, 974.
(ii) the formation of scrolls (FIG. 6(d) and (e)).

Also, as cross-sectional TEM (FIG. 6(e)) shows, some nanosheets were bent to radii < 20 nm without fracture, which is evidence for strong and flexible Ti₃C₂ layers. Similar scrolls were produced by sonication of graphene. See, e.g., L. M. Viculis, et al., Science 2003, 299, 1361; M. V. Savoskin, et al., Carbon 2007, 45, 2797. It is possible that the sonication used for exfoliation caused some nanosheets to roll into scrolls, as schematically shown in FIG. 6(f).

### Example 3: Experimental Characterization of the Product of the Reaction Between Ta₄AlC₃ and Aqueous HF - Ta₄C₃(OH)ₓ(F)_{y}.

Ta₄AlC₃ powder (ca. 10 g) was immersed in approximately 100 mL of a 50 % concentrated hydrofluoric acid, HF, (Fisher Scientific, Fair Lawn, NJ) solution at room temperature for 72 h. The resulting suspension was then washed several times using deionized water and centrifuged to separate the powders.

XRD analysis of the resulting material showed sharp peaks corresponding only to TaC, known to be an impurity in the starting material (i.e., in addition to peaks attributable to TaC, the XRD spectrum contained only broad peaks centered around 2θ values of ca. 6° and 34-36°). However, the XRD spectrum of a sample obtained by cold pressing the resulting material, showed strong, albeit broadened peaks at about 2θ = 5.7° and 6.8° (apparently shifted from 2θ ∼ 7.5 in XRD of Ta₄AlC₃), smaller peaks at about 2θ = 13° (apparently shifted from 2θ ∼ 15° in XRD of Ta₄AlC₃), 26°, and 29°, and broad, albeit low intensity peaks centered at about 2θ = 27-30° and 36°, none of which appear to correspond to TaC, but which are interpreted as being consistent with simulated spectra of Ta₄C₃(OH)₂. Compared with the XRD spectra of the original XRD spectrum of Ta₄AlC₃ (and its an accompanying pattern simulated by CrystalMaker®), the XRD pattern of the cold-pressed material also showed no evidence of otherwise distinguishing peaks at 2θ ∼ 22°, 29.5°.

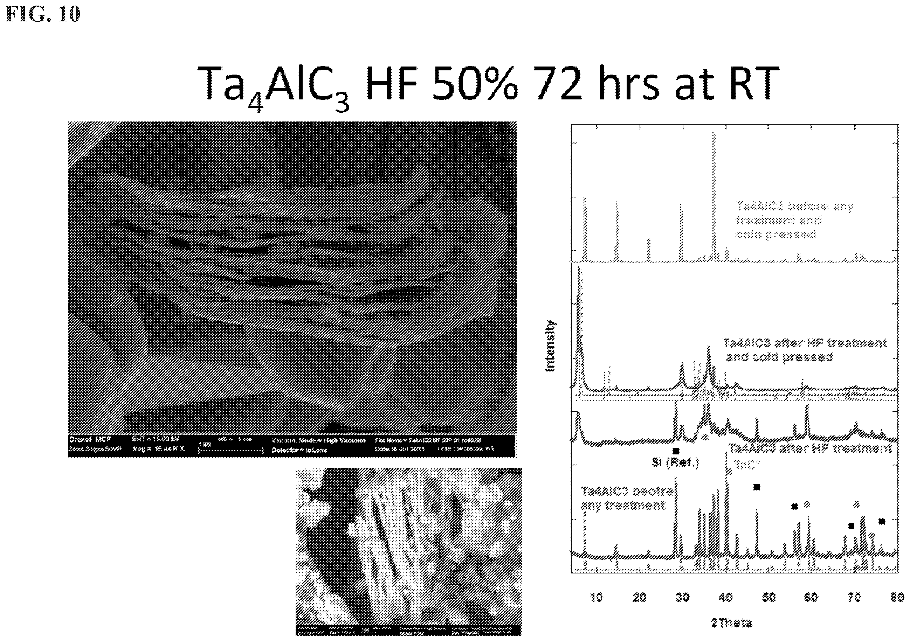

An illustrative XRD spectrum for an exfoliated, characterized to be Ta₄C₃(OH)ₓ(F)_{y}, are shown in **FIG. 10****.**

### Example 4: Experimental Characterization of the Product of the Reaction Between Ti₂AlC and Aqueous HF - Ti₂C(OH)ₓ(F)_{y}.

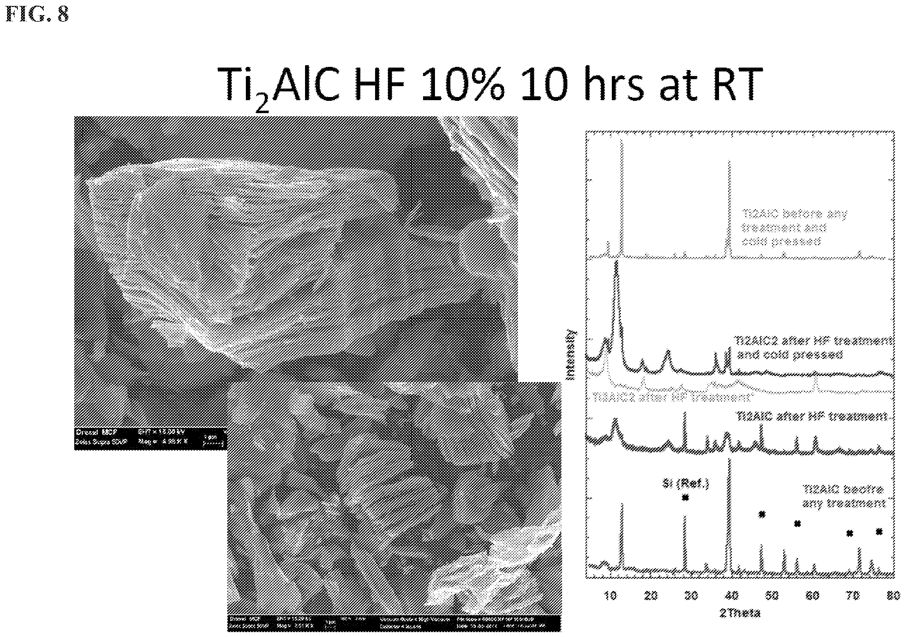

Ti₂AlC powder (Kanthal Corp., Sweden) was immersed in approximately 100 mL of a 10 % concentrated hydrofluoric acid, HF, (Fisher Scientific, Fair Lawn, NJ) solution at room temperature for 10 h. The resulting suspension was then washed several times using deionized water and centrifuged to separate the powders. SEM micrographs and XRD spectra of the resulting materials are shown in **FIG. 8****.**

### Example 5: Experimental Characterization of the Product of the Reaction Between TiNbAIC and Aqueous HF) - TiNbC (OH)ₓ(F)_{y}.

The TiNbAlC powders were made by mixing elemental titanium, Ti (Alfa Aesar, Ward Hill, USA, 99.5 wt % purity; 325 mesh), niobium, Nb (Atlantic Equipment Engineers, Bergenfield, USA, 99.8 wt % purity; 325 mesh), and the same A1 and C used above, in the molar ratio of 1:1:1.2:1, respectively, in a ball mill for 12 h. The powders were then heated at the rate of 10°C / min in a tube furnace to 1500°C for 1 h under flowing Ar. After cooling to room temperature, powders were processed as described above (see **Table 1**). SEM micrographs and XRD spectra of the resulting materials are shown in **FIG. 9****.**

The XRD patterns for TiNbA1C, before and after HF treatment **(****FIG. 9****),** show that the intensity of the TiNbAlC peaks decreased significantly after HF treatment (considering that 10 wt% Si was used as an internal reference) and a new broad peak at ~11.8° 2θ appeared after cold pressing. Here again a shoulder at a larger d spacing compared to the main peak is observed. The latter is most likely due to some exfoliated (Ti_{0.5},Nb_{0.5})₃AlC₂ that was present as a second phase in the starting powder. SEM micrographs **(****FIG. 9****)** clearly show exfoliated TiNbAlC particles. TEM micrographs, after sonication (not shown), show thin sheets composed of Ti, Nb, C, O, and F in an atomic ratio that EDX shows to be 14:16:23:34:13, respectively. HRTEM of a TiNbC layer (not shown) and its corresponding SAED again show hexagonal symmetry. At 0.2606 nm, the perpendicular separation of the (1010) lattice planes results in an a lattice constant of 0.301 nm. EELS for TiNbAlC after HF treatment and confirms the presence of Ti, Nb, C, F (not shown), and O, but no Al.

### Example 6: Experimental Characterization of the Product of the Reaction Between (V_{1/2}Cr_{1/2})₃AlC₂ and Aqueous HF) - (V_{1/2}Cr_{1/2})₃C₂ (OH)ₓ(F)_{y}.

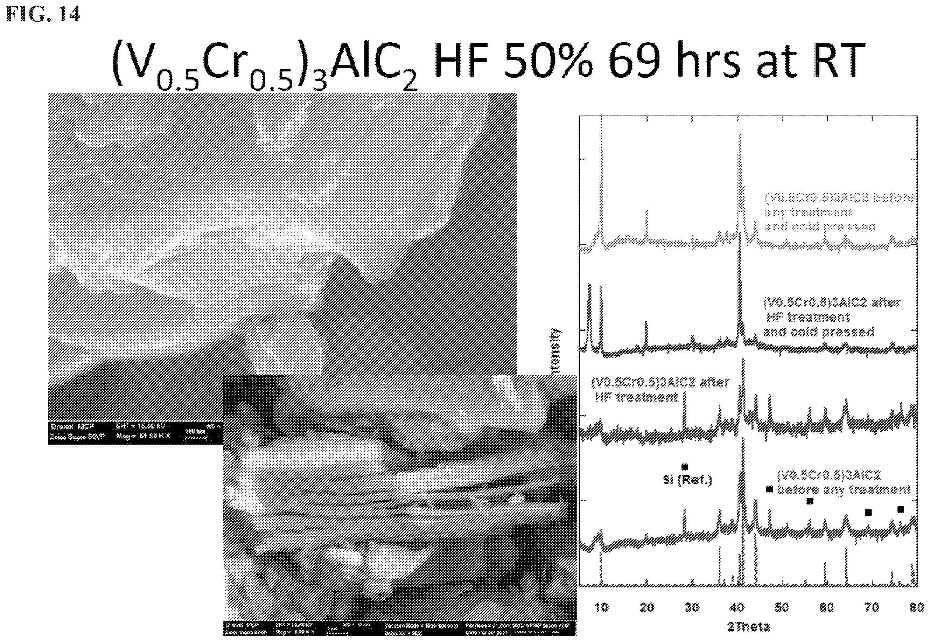

(V_{1/2}Cr_{1/2})₃AlC₂ powder was made by ball milling powders of 1.5V+1.5Cr+1.2A1+2C (molar ratios) for 12 hours, then heating the mixture under Ar to 1550°C, soaking at this temperature for 2 hours, and cooling to room temperature, after which a powder was obtained from the sintered mass using diamond coated milling bit. The powders were then exfoliated by stirring them in 50% aqueous HF at room temperature for 65 hr (5 gm powder in 50 mL acid). SEM micrographs and XRD spectra of the resulting materials are shown in **FIGs. 14-16****.**

### Example 7: Experimental Characterization of the Product of the Reaction Between Ti₃Al(CN) and Aqueous HF - Ti₃(CN)(OH)ₐ(F)_{b}.

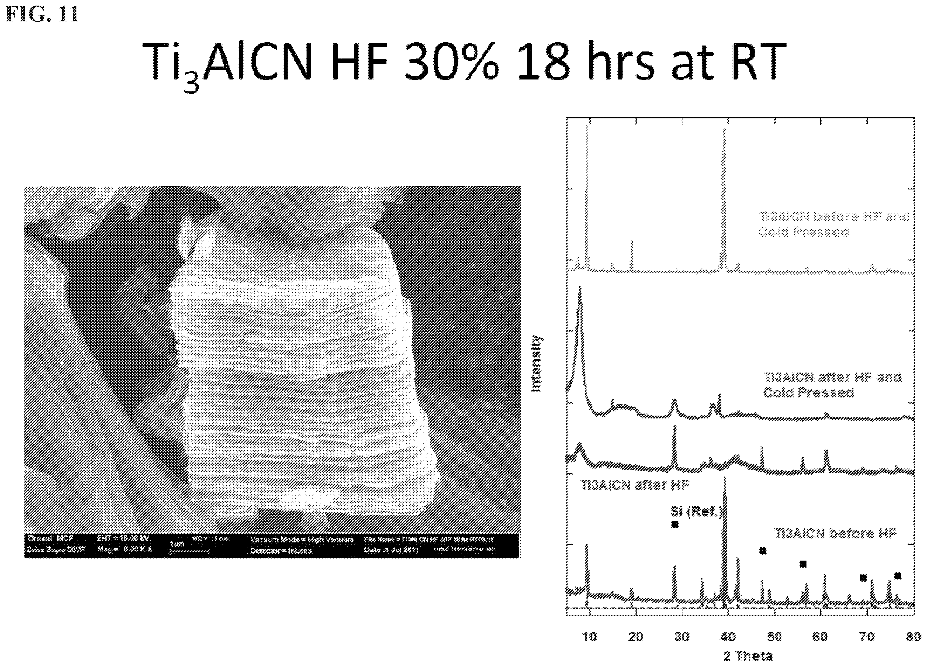

Ti₃Al(CN) powder was prepared was made by ball milling Ti:A1N:C = 3:1:1 (molar ratios) for 12 hours, then heating the mixture at 10°C/min to 1500°C, holding 2 hours, then cooling, all under Argon (C and Ti powders were purchased from Alfa Aesar, Ward Hill, MA). A1N powder was purchased from Sigma-Aldrich. The resulting material was crushed using mortar and pestle. The resulting powder was immersed and stirred in 30 % concentrated hydrofluoric acid, HF, (Fisher Scientific, Fair Lawn, NJ) solution at room temperature for 18 h. The resulting suspension was then washed several times using deionized water and centrifuged to separate the powders. SEM micrographs and XRD spectra of the resulting materials are shown in **FIGs. 11-13****.**

### Example 8: Effect of Chemical Exfoliation Processing Conditions on Formation and Yield of MXene Compositions.

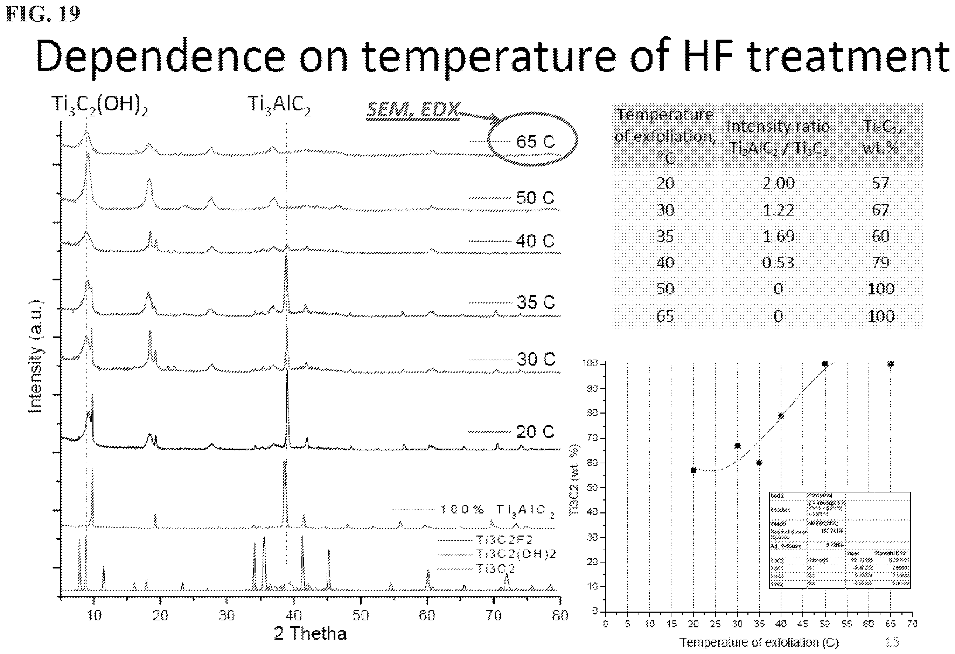

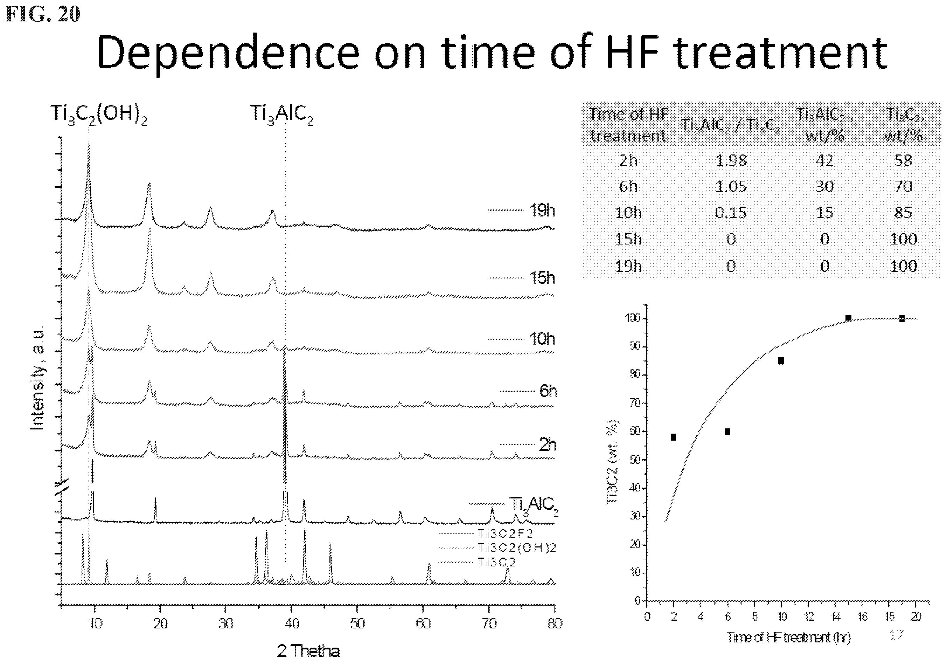

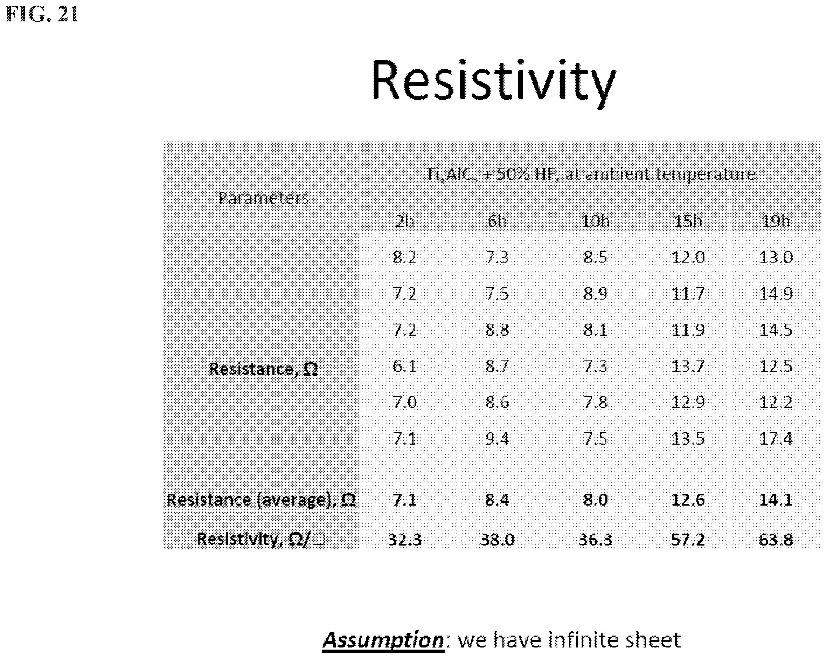

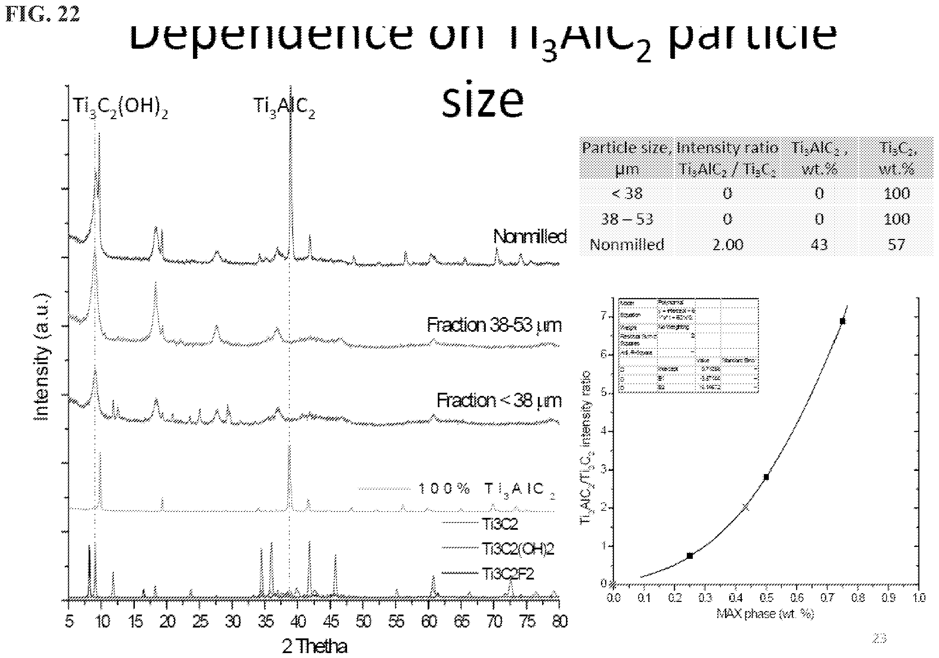

Starting with Ti₃AlC₂ powders as a representative material, a series of experiments were conducted to determine the effects of various process parameters on the chemical exfoliation of MAX phase materials to form the corresponding MXene compositions. In evaluating the effect of temperature on exfoliation, Ti₃AlC₂ powders were stirred in 50% aqueous HF for 2 hours at different temperatures (e.g., 20, 30, 40, 50, and 65°C). The effect of processing time was studied by stirring TiₛAlC₂ powders with 50% aqueous HF for 2 hours at room temperature over the time range of 2 to 19 hours. In testing the effect of initial particle size, Ti₃AlC₂ powders were crushed in ball milling machine and separated with sieves first, then exfoliated by stirring with 50% aqueous HF at room temperature for 2 hours. **FIGs. 19****,** **20****,** **21****,** and **22** illustrate the effect of HF temperature, time of treatment, and initial particle size, respectively. The specific conditions employed, where different than those described above, are provided in each figure.

| **Table 1. List of MAX Phases Exfoliated in This Work and Exfoliation Process Parameters^{a}** | | | | | | |
|---|---|---|---|---|---|---|
| | | | ***c* lattice constant (nm)** | | | |
| **Compound** | **HF Conc (%)** | **Time (hr)** | **Before HF** | **After HF** | **Domain size (nm)** | **Yield (wt%)** |
| Ti₂AlC | 10 | 10 | 1.36 | 4.504 | 6 | 60 |
| Ta₄AlC₃ | 50 | 72 | 2.408 | 3.034 | 38 | 90 |
| | | | | 2.843 | 18 | |
| TiNbAlC | 50 | 28 | 1.379 | 1.488 | 5 | 80 |
| (V_{0.5}Cr_{0.5})₃AlC₂ | 50 | 69 | 1.773 | 2.426 | 28 | NA |
| Ti₃AlCN | 30 | 18 | 1.841 | 2.228 | 7 | 80 |
| Ti₃AlC₂ | 30 | 2 | 1.842 | 2.051 | 11 | 100 |
| Nb₂AlC | 50 | 90 | 1.388 | 2.234 | 5 | 100 |
| Nb₄AlC₃ | 50 | 90 | 2.419 | 3.047 | 27 | 100 |
| V₂AlC | 50 | 90 | 1.313 | 1.973 | 10 | 60 |
| Mo₂GaC | 50 | 96 | 1.317 | 2.021 | 15 | NA |
| ^{a} The particle size for all MAX phases was <35 µm prior to exfoliation. The effects of HF treatment on the c lattice constant and the average domain size along [0001] deduced from the FWHM and the Scherrer formula are listed. The last column shows the estimated process yields. | | | | | | |

### Example 9: Preparation of MXene Compositions by the Electrochemical Exfoliation of MAX Phase Materials.

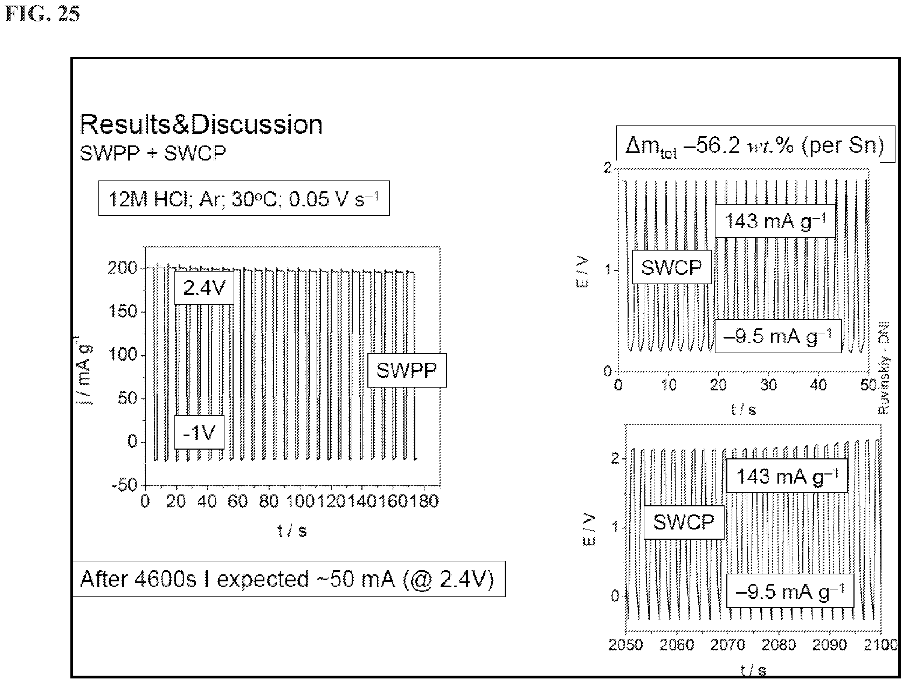

Ti₂SnC was made by ball milling 2Ti+Sn+C (molar ratios) for 12 hr, then heating the mixture at a ramp rate of 10°C/minute to 1250°C, holding for 2 hours and cooling to room temperature, all under Ar atmosphere. The resulting material was crushed using mortar and pestle to form a powder (Ti, Sn, and C powders were purchased from Alfa Aesar, Ward Hill, MA). Exfoliation of Ti₂SnC was demonstrated by selectively electrochemically removing Sn upon application of a repeated sequence composed of a short cathodic polarization (either potentiostatic or galvanostatic) followed by a long anodic polarization (either potentiostatic or galvanostatic) to an electrochemical system (see **FIG. 25** for a representative set of conditions; SWPP = square wave potential polarization; SWCP = square wave current polarization. Δmₜₒₜ refers to the loss in sample weight as a result of the electrochemical treatment). In this system, a hot pressed sample of Ti₂SnC was used as the anode, and Pt was used as the reference and working electrode. The electrolyte was either aqueous 5 M or 12 M HCl, and high purity Ar gas was constantly purged through the working solution to maintain an inert atmosphere.

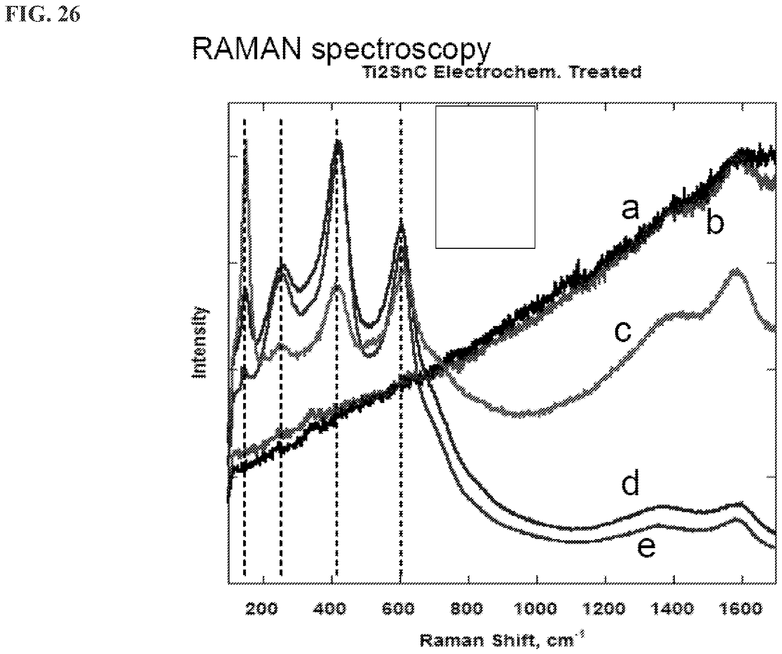

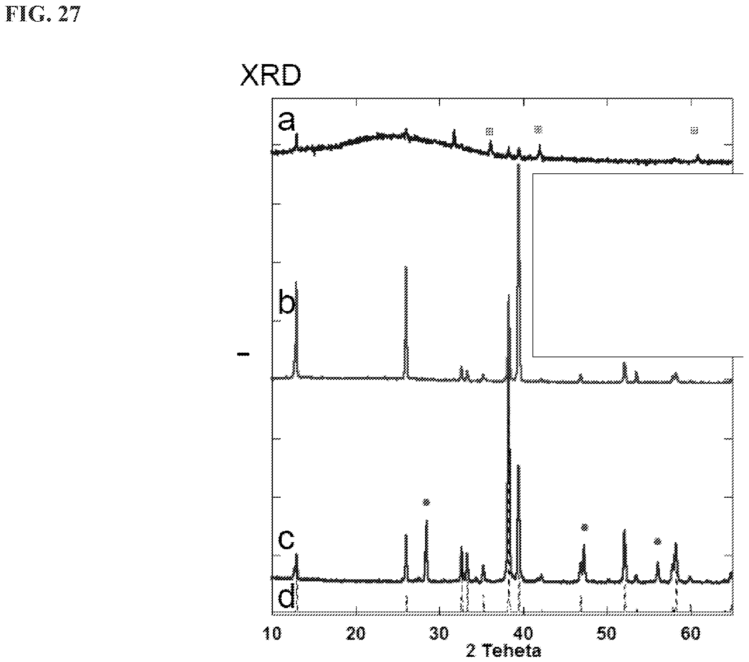

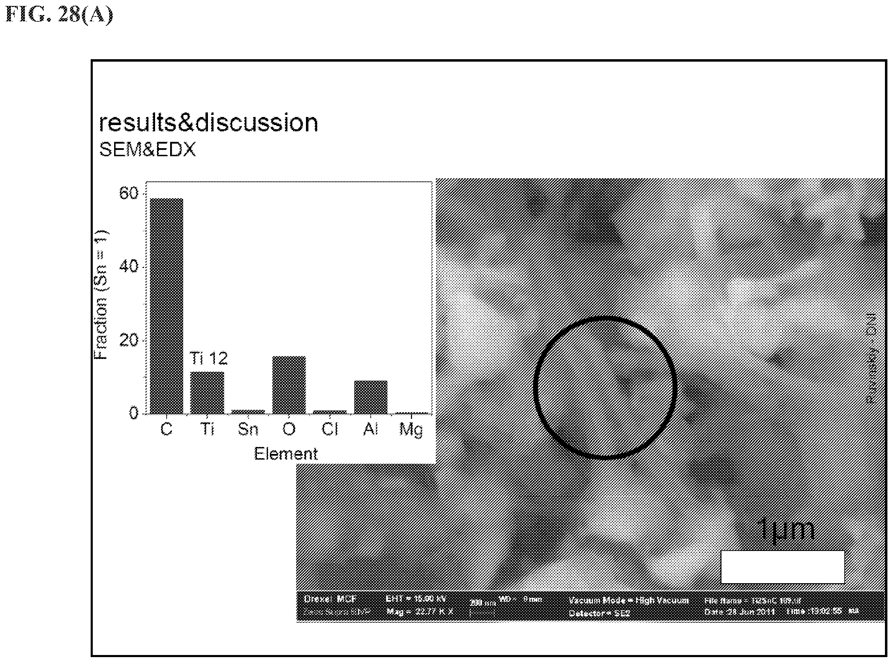

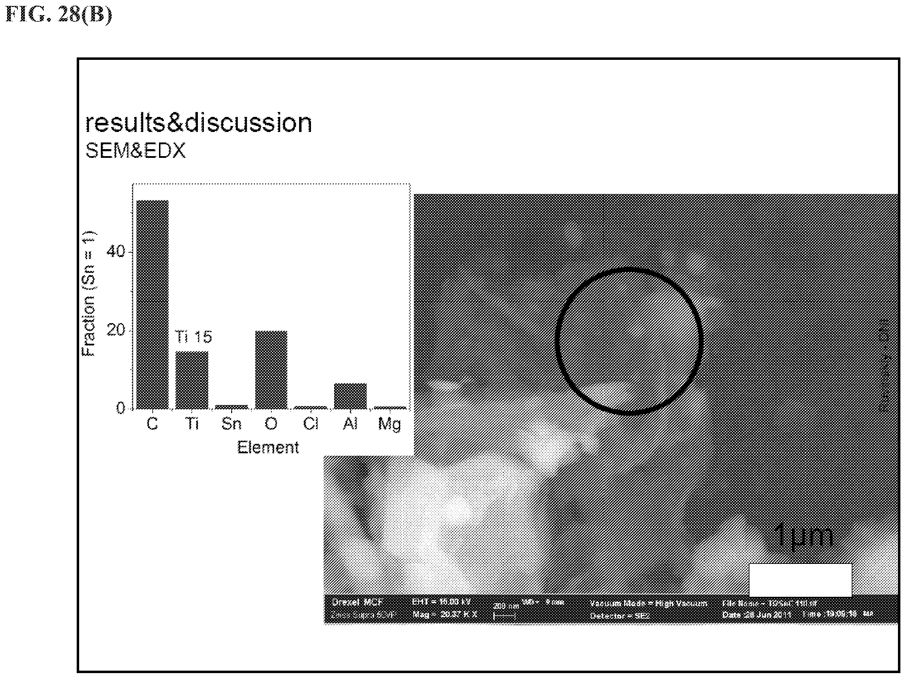

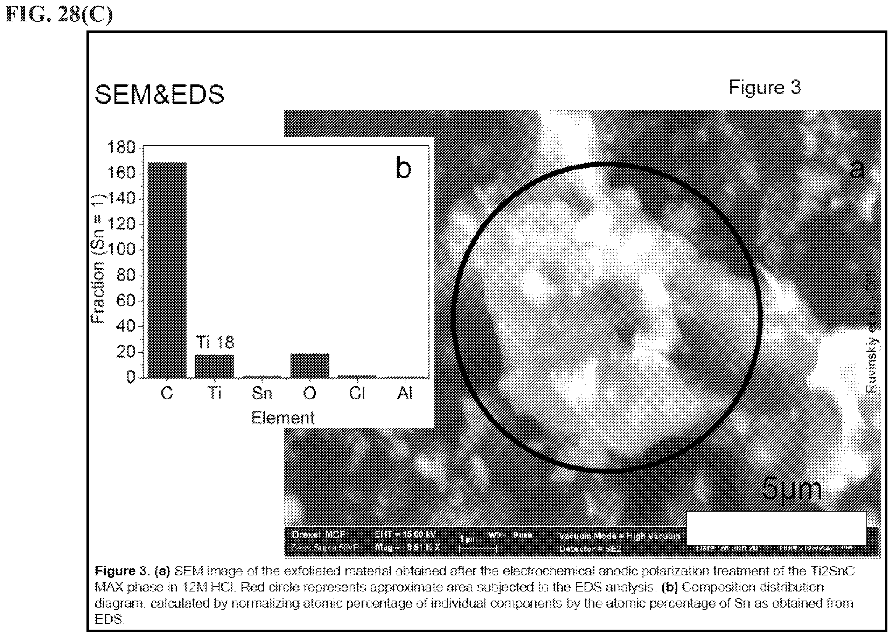

The rapid electrochemical corrosion of the anode material resulted in the formation of a finely dispersed powder which was collected at the bottom of the reaction vessel, washed with deionized water, and dried. The dried powder was subjected to a series of tests, the results of which are shown in **FIGs. 25-28****.** **FIG. 26** shows the dramatic difference in Raman spectra between the product (curves a and b) and the starting material (curves c-e), consistent with the changes seen in other similar transformations (compare, for example, the curves in FIG. 4(b)). Similarly, changes in the XRD spectra **(****FIG. 27****)** are indicative of the absence of starting material. Finally, EDX spectra shown in **FIG. 28****(A-C)** show that the powder is devoid of appreciable Sn, confirming its elimination (Note: the presence of O in these EDX spectra is consistent with a surface coating of the MXene comprising oxide or hydroxide. The presence of Si in the spectra is attributed to the substrate used in the measurement.

### Example 14. Intercalation of MXene Materials with Kaolinitic Intercalators.

The examples provided herein for the intercalation of various ions use Ti₃C₂Tₛ as a convenient template for investigation. It should be appreciated that the results described herein are expected to be reproducible with other MXene materials, and separate embodiments include those wherein the intercalation is also described with respect to these other MXene materials. That is, other specific embodiments include the other MXene materials described herein intercalated with the materials described herein, and the articles derived from such intercalated materials.

### Example 14.1 Methods and Materials.

The following chemicals were used in this Example: titanium aluminum carbide 211 (Ti₂AlC, > 92 wt.% purity, 3-ONE-2, Voorhees, USA), titanium carbide (TiC, 99 wt.% purity, Johnson Matthey Electronic, New York, USA), hydrofluoric acid (HF, 48-51 wt.%, Acros Organics, Morris Plains, USA), hydrazine monohydrate (HM, N₂H₄H₂O, > 98.0 wt.% purity, TCI America, Portland, USA), N,N-dimethylformamide (DMF, ≥ 99 wt.%, Acros Organics, Morris Plains, USA), dimethylsulfoxide (DMSO, m.w. 78.13, MP Biomedical Inc., Solon, USA), urea (Fisher Scientific, Fair Lawn, USA), acetone (≥ 99+ wt.%, Acros Organics, Morris Plains, USA), ethyl alcohol (Fisher Scientific, Fair Lawn, USA) tetrahydrofuran, THF (≥ 99+ wt.%, Acros Organics, Morris Plains, USA), chloroform (99.8 wt.%, stabilized in 0.5-1 % ethanol, Sigma Aldrich, St. Louis, USA), toluene (f.w. 92.14, Fisher Chemical, Fair Lawn, USA), hexane (≥99 wt.%, Reagent Plus, Sigma Aldrich, St. Louis, USA), thiophene (≥ 99+ wt.%, Sigma Aldrich, St. Louis, USA), formaldehyde (37% w/w, Fisher Chemical, Fair Lawn, USA). All chemicals were used as received without further purification.

**Characterization.** X-ray diffraction (XRD) patterns were recorded with a powder diffractometer (Siemens D500, Germany) using Cu K_{α} radiation with a wavelength ∼ 1.54 Å, with 0.02° 2θ steps and 1 sec dwelling time. A scanning electron microscope, (SEM, Zeiss Supra 50VP, Germany) was used to obtain images of the particles. The 2-D sheets were also imaged with a transmission electron microscope, TEM, (JEOL JEM-2100, Japan) using an accelerating voltage of 200 kV. The TEM samples were prepared by suspending the powders in isopropanol, sonicating for 1 min and drying a drop of the mixture on a 200 mesh lacey-carbon-coated copper grid. An XPS (PHI 5000, ULVAC-PHI, Inc., Japan) was used to analyze the surface elemental composition powders before and after intercalation. The resistances of freestanding cold-pressed discs of non-intercalated and intercalated MXenes were measured using a four-probe technique (Cascade Probe Station CPS-1303-24 with 4-point probe head Alessi C4S-57, Cascade Microtech, Inc., Beaverton, USA). A detailed experimental section (materials used and techniques of material preparation) can be found in the Supplementary Information.

**Synthesis of Ti₃AlC₂.** The Ti₃AlC₂ powder was synthesized from a mixture of Ti₂AlC with TiC in a 1:1 molar ratio. The mixture was ball milled for 24 h, heated at 10 °C/min to 1350 °C in a tube furnace under Ar flow, and held in these conditions for 2 h. After cooling, the lightly sintered brick was crushed using a mortar and pestle.

**Synthesis of MXene.** Non-sieved Ti₃AlC₂ powder was treated with HF solutions at room temperature (RT), for 22 h. The resulting suspensions were washed five times using deionized water and centrifuged to separate the powder until pH reached ~4. The resulting black powder was divided into two portions. A small part of still wet material was used immediately for intercalation. The rest was dried under vacuum at 100 °C for 22 h, placed into capped glass vials and stored at ambient conditions for further experiments.

**Intercalation of MXene.** To intercalate MXene, hydrazine monohydrate (HM) was used. Two types of powders were used: i) as-received, washed, wet MXene and, ii) type (i) powder dried at 100 °C for 22 h. The MXene powders were suspended either in HM or a 1:3 mixture of HM and DMF, and stirred for 24 h with a magnetic stirrer, either at RT or at 80 °C.

In all cases, the weight ratio of HM:MXene was 10:1. When the treatment involved only hydrazine monohydrate, the suspensions were filtered and washed with ethanol. In the case of the mixture of HM and DMF, DMF was used for washing instead of ethanol. The powders were then dried in a desiccator under vacuum, created by a water jet pump (the pressure in the desiccator was < 10 Torr), at RT for 24 h or in the vacuum (∼10⁻² Torr) oven at 120 °C for 24 h.

Other organic compounds were also tried for intercalation into MXene. Those included DMSO, urea, DMF, acetone, ethyl alcohol, THF, chloroform, toluene, thiophene, and formaldehyde. The procedure to synthesize the MXene intercalation compounds was the same in all cases: i) 9 weighted samples of Ti₃C₂, 0.3 g each, were mixed with 5 ml of each organic solvent (excluding urea), then stirred for 24 h at RT; ii) in case of urea, 5 ml of 50 wt.% aqueous solution of urea was added to 0.3 g of Ti₃C₂ and stirred for 24 h at 60 °C. Afterwards, the resulting colloidal solutions were filtered and dried in a desiccator under vacuum at RT.

**De-intercalation of MXene.** To de-intercalate hydrazine/DMF, the reacted powder was carefully weighed, placed in a graphite crucible and outgassed at RT in vacuum (∼10⁻⁶ Torr) for 24 h. While under vacuum, the powder was then heated to 200 °C at 10 °C/min, held at this temperature for 72 h and cooled to RT. The powder remained under vacuum for another 48 h before it was retrieved. Between its removal from the furnace and re-weighing, the sample was exposed to ambient air for ∼ 3 min.

**Preparation of pressed MXene discs.** The non-intercalated and intercalated MXene powders were cold pressed to a load corresponding to a stress of 0.8 GPa using manual hydraulic pellet press (Carver, Model 4350.L, Carver, Inc., Wabash, USA). The resulting discs were 12.5 mm in diameter and in the range of 228-432 µm thick.

### Example 14.2. Observations on the Results of Experiments Intercalating Kaolinitic Intercalators.

Consistent with the apparent layered structure of MXene materials, their intercalation behaviors appear to resemble that of clays. Numerous compounds were studied for clay intercalation, such as formamide and its derivatives, dimethyl sulfoxide (DMSO), urea, alkali metal salts, long-chain alkylamines, and others. Hydrazine monohydrate (HM) or N₂H₄·H₂O, is probably the most common intercalation agent for clays. It intercalates into the interlayer space between the octahedral aluminum hydroxide and tetrahedral silica sheets, resulting in an expansion of the clay *c-*lattice parameter, *c*-LP, along [0001] from 7.2 to 10.3-10.4 Å. As shown below, the intercalation of hydrazine and co-intercalation with DMF between the Ti₃C₂ layers also resulted in an increase of the *c* lattice parameter, in this case from 19.5 Å to 25.48 Å and 26.80 Å, respectively. Partial de-intercalation of hydrazine occurred by heating the intercalated Ti₃C₂ at 120 °C in vacuum and de-intercalation of both hydrazine and DMF at 200 °C. Comparison of molecular dynamics simulation and experimental results suggested that a nearly complete monolayer of hydrazine is inserted between the Ti₃C₂ layers of the host. Intercalation of Ti₃C₂ with urea and dimethyl sulfoxide (DMSO), as well as intercalation of Ti₃CN and TiNbC with hydrazine and DMSO demonstrated in this study, suggest a possibility of synthesis of dozens of new intercalation compounds based on carbides and carbonitrides of transition metals.

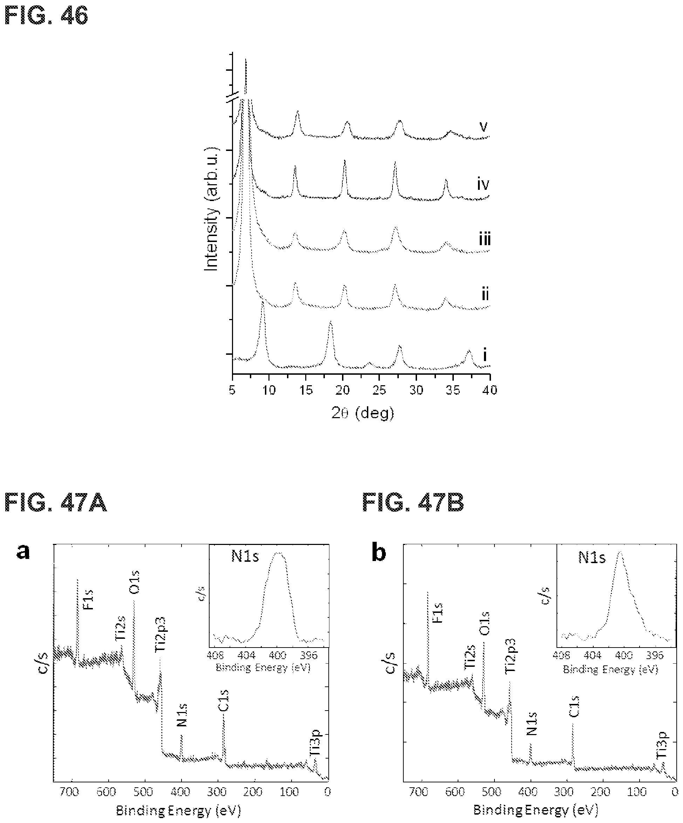

The schematic of intercalation of HM into the MXene is shown in **FIG. 45A****.** The (001) X-ray diffraction (XRD) peaks of MXene most pronounced before intercalation with HM and/or DMF, were still present after intercalation, but shifted to lower 2θ angles **(****FIG. 45B-C****,** **FIG. 46****). Table 5** summarizes the *c*-LPs values for the HM and HM in DMF treated materials. The *c*-LP of the initial material was 19.5±0.1 Å, a value that does not change much with post intercalation treatment. After the initial powder was exposed to HM and HM in DMF at 80 °C for 24 h, the *c*-LPs increased to 25.48±0.02 Å and 26.8±0.1 Å, respectively. The larger *c*-LP increase in the latter case points to a synergistic effect when the HM was dissolved in DMF prior to its intercalation. Note that when DMF alone was used, the increase in c was very small (22.9±0.2 Å), suggesting limited intercalation.

When the HM intercalated powders were heated to 120 °C, their *c*-LPs decreased from 25.48 to 20.6±0.3 Å **(****FIG. 45B****-iii and** **FIG. 45C****-iii),** signifying that the intercalation process was reversible. In contrast, heating the powders intercalated with HM and DMF to 120 °C resulted in a small reduction in *c*-LP **(****FIG. 45B****-ii,** **FIG. 45C****-ii).** However, when the same powder was vacuum dried at 200 °C, the *c*-LP decreased to 20.1±0.5 Å **(****FIG. 45B****-ii,** **FIG. 45B****-ii).** It follows that the HM/DMF combination was more resistant to de-intercalation than HM alone. Without being bound by the correctness of any particular theory, this could be due to a higher boiling point of DMF (153°C) compared to that of HM (114°C).

**Table 5. c-lattice parameters, in Å, for non-intercalated MXene and MXene treated with HM, HM and DMF, and dried in different conditions**

| **Intercalant** | Non-intercalated | MD-non-intercalated | HM (XRD)‡ | MD (N/C ratio 0.375) | HM in DMF (XRD)‡ |
|---|---|---|---|---|---|
| Initial material* | 19.5±0.1 | 19.85±0.01 | 25.48±0.02 | 25.31±0.04 | 26.8±0.1 |
| After drying @ 120 °C | 19.5±0.1 | **N/A** | 20.6±0.3 | **N/A** | 26.0±0.2 |
| Vacuum drying @ 200°C | 19.3±0.2 | **N/A** | **N/A** | **N/A** | 20.1±0.5 |

| | | | | | |
|---|---|---|---|---|---|
| * Prior to intercalation, the Ti₃C₂-based powder was dried at 100 °C for 22 h. ‡ Both HM and HM in DMF treatments were carried out at 80 °C for 24 h. | | | | | |

The XRD consistently showed that MXene were intercalated with HM. The absence of XRD peaks corresponding to a c-LP of 19.5 Å **(****FIG. 45B****-i,** **FIG. 45C****-i)** implied that nearly entire space between MXene layers was intercalated.

XPS spectra **(****FIG. 47****)** provided further evidence of intercalation. As it was previously described, pure exfoliated Ti₃C₂ sample showed presence of Ti-C and Ti-O bonds as well as OH groups suggested by the observed Ols peak around 530 eV. In case of intercalated samples, the Nls signal was observed around 400 eV in XPS spectra of both Ti₃C₂ treated with HM and HM/DMF (insets in **FIG. 47A** and **B****,** respectively). As expected, no peaks of nitrogen were detected in pure Ti₃C₂.

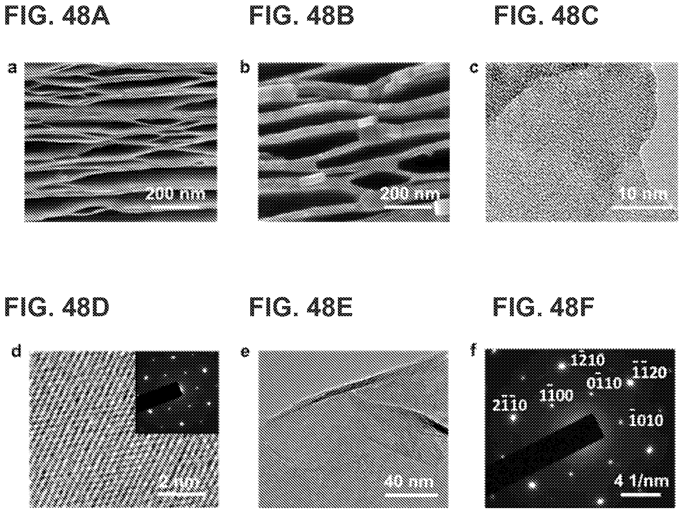

SEM images of the exfoliated Ti₃C₂ powders, before and after HM treatment in DMF at 80°C for 24 h, shown in **FIG. 48A-B****,** respectively, confirmed that: (i) the MXene remains exfoliated after intercalation, and, (ii) the layers apparently thicken **(****FIG. 48B****)** by gluing monolayers together forming 20-50 nm thick lamellas. These structures were formed when organics act as adhesive ligaments, gluing MXene monolayers together.

The smaller fragments attached to the edges of a larger MXene particles in **FIG. 48B** were debris that most probably were formed during the long (24 h) stirring with magnetic stirrer bar. Such debris has never been observed for non-intercalated Ti₃C₂. Their formation suggests a different mode of fracture of MXene layers after intercalation.

TEM images and corresponding SAED patterns of Ti₃C₂ intercalated with HM in DMF at 80 °C for 24 h **(****FIG. 48A-F****)** showed no significant changes in the structure of the basal planes of the Ti₃C₂ after intercalation **(****FIG. 48C** **and** inset in **FIG. 48D****).** When separate MXene sheets were observed, their SAED patterns **(****FIG. 48F****)** confirmed the same hexagonal crystal structure of the basal planes of the intercalated sample typical for both exfoliated Ti₃C₂ MXene (inset in **FIG. 48D**) and non-exfoliated Ti₃AlC₂ MAX phase. Measurements of the d-spacings for the intercalated materials gave the values 2.648 Å and 1.540 Å for the (01̅10) and (12̅10) lattice planes, respectively. These values result in an *a*-LP of 3.057 Å, a value that is in excellent agreement with the *a*-LP of exfoliated Ti₃C₂ before intercalation, as well as non-exfoliated Ti₃AlC₂, *viz.* 3.058 Å.

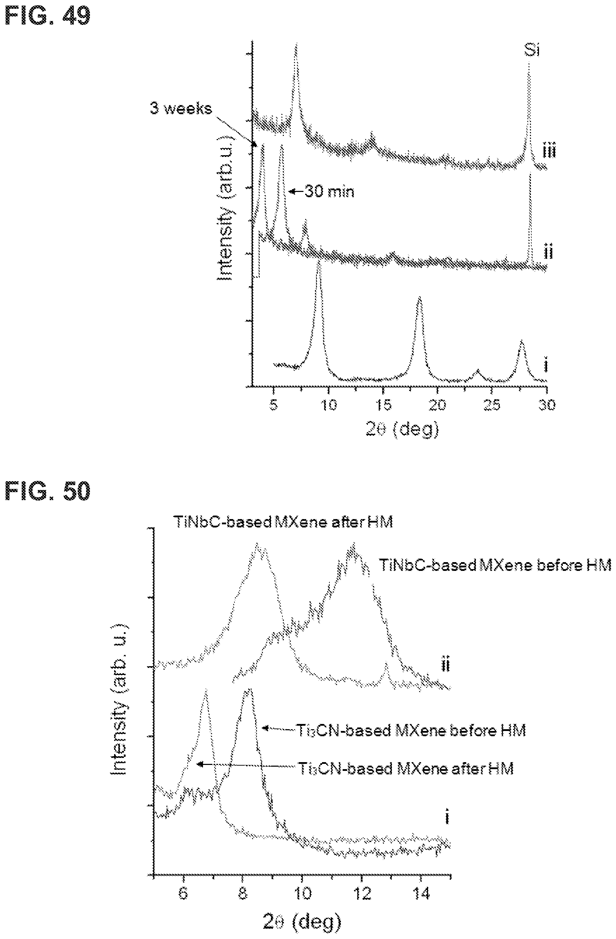

Other potential intercalants were also tested. The following organic compounds were tested: thiophene, ethanol, tetrahydrofuran, formaldehyde, chloroform, toluene, hexane, DMSO, and urea. Of these, only DMSO and urea resulted in an increase in the *c*-LPs from 19.5±0.1 Å to 35.04±0.02 Å and 25.00±0.02 Å, respectively **(****FIG. 49****).** The intercalation of these compounds was in good agreement with data reported for kaolinite.

Interestingly, XRD patterns taken 3 weeks after the initial DMSO intercalation **(****FIG. 49****-ii)** showed an even larger downshift of the (002) peaks corresponding to a *c*-LP of 44.8±0.1 Å. Based upon this observation, together with the fact that MXene powders are highly hygroscopic and over the same period of time they become increasingly wet, this further increase of *c*-LPs over time may be due the intercalation of H₂O from the ambient air into the pre-open interlayer space of the intercalated MXene, followed by capillary condensation of water. This effect was only observed for the DMSO intercalated MXene powders.

Although the results above were obtained on Ti₃C₂, other MXenes can be intercalated in a similar way. To demonstrate that intercalation was a general phenomenon rather than the exclusive property of the Ti₃C₂-based MXene, the treatment of two other members of the MXene family, Ti₃CN and TiNbC, was carried out with HM. As in the case of Ti₃C₂, the shift of the major XRD peak to lower 2θ angles **(****FIG. 50****)** confirmed their intercalation. It is important to note that one of those phases was a carbonitride with the same general formula as Ti₃C₂ (M₃X₂), whereas the other one represented a different kind of MXene with the formula M₂X (TiNbC), consistent with the thinking that other MXenes can form intercalation compounds as well.

To further support the fact of intercalation, the resistivity of non-intercalated MXenes and MXenes treated with HM was measured **(Table 6).** Expansion of the van der Waals gap between sheets requires energy that comes from charge transfer between the guest and MXene, and alters the number of charge carriers, affecting the conductivity. As expected, the resistivity values of all intercalated samples were higher than that of non-intercalated due to the increase of their *c*-LPs after intercalation. The difference in magnitude of the resistivity increase for different intercalated MXenes at relatively the same expansion might be partially explained by different number of MXene atomic layers. In case of M₃X₂, the resistivity increased by an order of magnitude whereas the increase by two orders is observed for M₂C compounds. It is important to note that the resistivity values might be affected by sample density and the pressure used to compress the discs. For instance, the sheet resistivity of non-intercalated Ti₃C₂ pressed at 0.8 GPa reported in **Table 6** was lower than that pressed at 1 GPa.

**Table 6. Sheet resistivity, resistivity and density of cold-pressed discs for different non-intercalated MXenes and MXenes treated with Hydrazine Monohydrate (HM).**

| Sample | Sheet Resistivity, Ω/□ | | Resistivity, Ωm | | Density, g/cm³ | |
|---|---|---|---|---|---|---|
| | Non-intercalated | HM treated | Non-intercalated | HM treated | Non-intercalated | HM treated |
| Ti₃C₂ | 61 | 243 | 0.016 | 0.056 | 2.58 | 2.71 |
| Ti₃CN | 43 | 711 | 0.011 | 0.249 | 3.22 | 2.90 |
| Nb₂C | 321 | 12806 | 0.139 | 4.977 | 3.75 | 3.47 |
| TiNbC | 230 | 44661 | 0.092 | 17.471 | 3.67 | 3.01 |

The properties of intercalation compounds, including electrical conductivity discussed above, to a large extent were determined by the amount, arrangement and reactions of the guest molecules with the host material. In addition, the structure of the intercalant often provided a key to deciphering the intercalation mechanisms. However, as alluded to above, this problem's complexity was illustrated by the large body of literature on the structure of HM intercalation in clays.

Concerning the co-intercalation of HM and DMF, only simple geometrical considerations were provided. The increase of *c*-LP by 7.3 Å over the non-intercalated MXene, measured for this material after intercalation at room temperature **(Table 5)** could be explained by the insertion of both HM and DMF molecules. Based on the experimentally measured increase in MXene *c*-LPs, upon co-intercalation of HM and DMF, the insertion of 1 N₂H₄ and 1 DMF molecule in a stack configuration into the interlayer spacing of MXene can be suggested. The resulting increase in *c*-LP (7.3 Å) is, in this case, close to the sum of 2.4 Å and 5.0 Å- the changes in *c*-LPs reported for N₂H₄ and DMF intercalated kaolinites, respectively. As noted above, the reduction of this value to 6.5 Å after drying at 120°C **(Table 5)** could be attributed to the partial de-intercalation of HM molecules, leaving behind DMF molecules.

### Example 15: Sheet Resistivities and Contact Angles of MX-ene Discs.

To measure the sheet resistances and the contact angle of various MXene compositions, MXene discs (25 mm in diameter, 300 µm thick) were cold-pressed from the reacted powders. The latter were placed in a die and cold-pressed to a load corresponding to a stress of 1 GPa. The surface or sheet resistances of cold-pressed, free-standing MXene discs were measured using a four-probe technique (Cascade Probe Station CPS-1303-24 with 4-point probe head Alessi C4S-57, Cascade Microtech, Inc., Beaverton, USA).

Contact angle measurements of deionized water were also performed at room temperature using the sessile drop technique. Ten microliter water drops were placed on the surfaces of cold-pressed MXene discs. The contact angles were measured from photographs taken with a CCD camera yielding an accuracy of approximately ±3°.

The densities of the cold-pressed discs of the various MXene compositions **(Table 7)** varied between 2.91 g/cm₃ for Ti₂C to 6.82 g/cm³ for Ta₄C₃. If one assumes the c lattice parameters listed in Table 1 and OH terminated surfaces of MXene sheets, then it is possible to calculate the theoretical densities. The last row in **Table 7** lists the measured densities of the pressed discs. The numbers in parentheses list the % of theoretical densities that range from 50 to ca. 65%.

The sheet resistivity and resistivities of the various MXene discs are also shown in **Table 7.** The resistivity values are higher than the MAX phases before treatment (<10 Ω / □) presumably because of the replacement of the A layers with OH and/or F. When it is assumed that surface groups are similar in all of the exfoliated MAX phases, the difference in the resistivity between the different phases can be partially explained by the different number of atomic layers (3, 5, and 7 for M₂X, M₃X₂, and M₄X₃ phases, respectively). It is important to note that the resistivity values reported in **Table 7** should be significantly higher than single MXene sheets because of the method by which the resistivity was measured. For example, the resistivity of bulk sintered T1₃AlC₂ is 0.39 µΩm. When Ti₃AlC₂ powders were cold-pressed at 1 GP, their resistivity increased to 1200 µΩ-m, a, roughly, 3000 time increase.

Contact angle measurement results for water droplets on the cold-pressed discs of exfoliated phases are also listed in **Table 7.** These values are lower than those of the corresponding MAX phases -- that were also measured in this work on cold-pressed samples, which were around 60°. The reduction in contact angle can be explained by the presence of OH surface groups after the HF treatment. In contradistinction, graphene can be transformed from superhydrophopic to superhydrophilic by altering the surface groups. The hydrophilicity of the MXenes would be an advantage when using aqueous electrolytes in energy storage devices or dispersing in water and alcohols for further processing.

| **Table 7. Resistivity and Contact Angle of Water on Cold-Pressed Free-Standing Discs for Different Exfoliated Phases and Their Densitities** | | | | | |
|---|---|---|---|---|---|
| **Property** | **Ti₂C** | **TiNbC** | **Ti₃CNₓ** | **Ta₄C₃** | **Ti₃C₂** |
| **Resistivity, Ω / □** | 339 | 171 | 125 | 104 | 22 |
| **Resistivity, Ω m** | 0.068 | 0.052 | 0.037 | 0.021 | 0.005 |
| **Contact angle, deg** | 32 | 31 | 27 | 41 | 34 |
| **Density of cold pressed discs^{a}, g/cm³ (% of theoretical)** | 2.91 (62%) | 3.23 (52%) | 2.95 (64%) | 6.82 (53%) | 3.12 (60%) |
| ^{a} The densities were estimated from the dimensions and weights of the cold-pressed discs. Number in parentheses is relative theoretical density assuming OH termination of the MX-ene surfaces and the c parameters listed in **Table 1.** | | | | | |

As those skilled in the art will appreciate, numerous modifications and variations of the present disclosure are possible in light of these teachings, and all such are contemplated hereby. For example, in addition to the embodiments described herein, the present disclosure contemplates and claims those inventions resulting from the combination of features cited herein and those of the cited prior art references which complement the features of the present disclosure. Similarly, it will be appreciated that any described material, feature, or article may be used in combination with any other material, feature, or article, and such combinations are considered within the scope of this disclosure. As noted above, the present invention is a stacked assembly according to claim 1. Further embodiments of the invention are described in the dependent claims.

## Claims

1. A stacked assembly of at least two layers having first and second surfaces, each layer comprising:
a substantially two-dimensional array of crystal cells,
each crystal cell having the empirical formula of Mₙ₊₁Xₙ, such that each X is positioned within an octahedral array of M;
wherein M is at least one Group IIIB, IVB, VB, or VIB metal;
each X is C, N, or a combination thereof; and
n = 1, 2, or 3;
wherein the layers are characterized as having an average surface area and interlayer distance; and
wherein a kaolinitic intercalator is intercalated between at least some of the layers, and wherein the kaolinitic intercalator is hydrazine, DMSO, urea, N, N-dimethylformamide, N-methylformamide(NMF) or 1-methyl-2-pyrrolidone (NMP).

2. The stacked assembly of claim 1, wherein Mₙ₊₁Xₙ comprises SC₂C, SC₂N, Ti₂C, Ti₂N, Mo₂C, V₂C, V₂N, Cr₂C, Cr₂N, Zr₂C, Zr₂N, Nb₂C, Nb₂N, Hf₂C, Hf₂N, Ti₃C₂, Ti₃N₂, V₃C₂, V₃C₂, Ta₃C₂, Ta₃N₂, Ti₄C₃, Ti₄N₃, V₄C₃, V₄N₃, Ta₄C₃,Ta₄N₃, or a combination thereof.

3. The stacked assembly of claim 2, wherein Mₙ₊₁Xₙ comprises Ti₂C, V₂C, Mo₂C, Ti₂N, Ti₃C₂, Ti₃N₂, Ti₄C₃, Ti₄N₃, Ta₃C₂, Ta₃N₂, Ta₄C₃, or Ta₄N₃, or a combination thereof.

4. The stacked assembly of claim 3, wherein Mₙ₊₁Xₙ comprises Ti₃C₂, TiNbC, Nb₂C, Ti₃CN, Ti₂C, Ta₄C₃, or (V_{1/2}Cr_{1/2})₃C₂.

5. The stacked assembly of claim 1, wherein Mₙ₊₁Xₙ is Ti₃C₂, TiNbC, Ti₃CN, or Ti₂C.

6. The stacked assembly of claim 5, wherein Mₙ₊₁Xₙ is Ti₃C₂.

7. The stacked assembly of claim 1 wherein at least one of the surfaces has bound thereto alkoxide, carboxylate, halide, hydroxide, hydride, oxide, sub-oxide, nitride, sub-nitride, sulfide, thiol, or a combination thereof.

8. The stacked assembly of claim 1, wherein the number of layers is in the range of 2 to 50.

9. The stacked assembly of claim 1, wherein the average area of the layers is in the range of from 100 nm² to 10,000 nm² or from 100 µm² to 10,000 µm².

10. The stacked assembly of claim 1, said assembly exhibiting at least 65% tranparency to at least one wavelength of light in a range of from 250 nm to 850 nm and a surface resistivity of less than 50 micro-ohm-meter.

11. An energy-storing device or electrode comprising the stacked assembly of claim 1.

## Patentansprüche

1. Stapelverbund von mindestens zwei Schichten mit ersten und zweiten Oberflächen, wobei jede Schicht Folgendes umfasst:
ein weitgehend zweidimensionales Feld von Kristallzellen,
wobei jede Kristallzelle die Verhältnisformel Mₙ₊₁Xₙ aufweist, sodass jedes X innerhalb eines oktaedrischen Felds von M liegt;
wobei M für mindestens ein Metall der Gruppe IIIB, IVB, VB oder VIB steht;
jedes X für C, N oder eine Kombination davon steht und n = 1, 2, oder 3;
wobei die Schichten **dadurch gekennzeichnet sind, dass** sie eine durchschnittliche Oberfläche und einen Zwischenschichtabstand aufweisen, und
wobei ein kaolinitischer Interkalator zwischen zumindest einigen der Schichten interkaliert ist und wobei es sich bei dem kaolinitischen Interkalator um Hydrazin, DMSO, Harnstoff, N,N-Dimethylformamid, N-Methylformamid (NMF) oder 1-Methyl-2-pyrrolidon (NMP) handelt.

2. Stapelverbund nach Anspruch 1, wobei Mₙ₊₁Xₙ SC₂C, SC₂N, Ti₂C, Ti₂N, Mo₂C, V₂C, V₂N, Cr₂C, Cr₂N, Zr₂C, Zr₂N, Nb₂C, Nb₂N, Hf₂C, Hf₂N, Ti₃C₂, Ti₃N₂, V₃C₂, V₃C₂, Ta₃C₂, Ta₃N₂, Ti₄C₃, Ti₄N₃, V₄C₃, V₄N₃, Ta₄C₃, Ta₄N₃ oder eine Kombination davon umfasst.

3. Stapelverbund nach Anspruch 2, wobei Mₙ₊₁Xₙ Ti₂C, V₂C, Mo₂C, Ti₂N, Ti₃C₂, Ti₃N₂, Ti₄C₃, Ti₄N₃, Ta₃C₂, Ta₃N₂, Ta₄C₃ oder Ta₄N₃ oder eine Kombination davon umfasst.

4. Stapelverbund nach Anspruch 3, wobei Mₙ₊₁Xₙ Ti₃C₂, TiNbC, Nb₂C, Ti₃CN, Ti₂C, Ta₄C₃ oder (V_{1/2}Cr_{1/2}) ₃C₂ umfasst.

5. Stapelverbund nach Anspruch 1, wobei Mₙ₊₁Xₙ Ti₃C₂, TiNbC, Ti₃CN oder Ti₂C ist.

6. Stapelverbund nach Anspruch 5, wobei Mₙ₊₁Xₙ Ti₃C₂ ist.

7. Stapelverbund nach Anspruch 1, wobei an mindestens einer der Oberflächen Alkoholat, Carboxylat, Halogenid, Hydroxid, Hydrid, Oxid, Suboxid, Nitrid, Subnitrid, Sulfid, Thiol oder eine Kombination davon gebunden ist.

8. Stapelverbund nach Anspruch 1, wobei die Anzahl der Schichten im Bereich von 2 bis 50 liegt.

9. Stapelverbund nach Anspruch 1, wobei die durchschnittliche Fläche der Schichten im Bereich von 100 nm² bis 10.000 nm² oder 100 µm² bis 10.000 µm² liegt.

10. Stapelverbund nach Anspruch 1, wobei der Verbund im Bereich von 250 nm bis 850 nm eine mindestens 65%ige Transparenz für mindestens eine Lichtwellenlänge und einen Oberflächenwiderstand von weniger als 50 Mikro-Ohmmeter besitzt.

11. Energiespeichereinrichtung oder Elektrode, umfassend den Stapelverbund nach Anspruch 1.

## Revendications

1. Assemblage empilé d'au moins deux couches ayant des première et seconde surfaces, chaque couche comprenant :
un agencement pratiquement bidimensionnel de mailles cristallines,
chaque maille cristalline ayant la formule empirique Mₙ₊₁Xₙ, de façon telle que chaque X est positionné à l'intérieur d'un agencement octaédrique de M ;
dans lequel chaque M est au moins un métal du groupe IIIB, IVB, VB ou VIB ;
chaque X est C, N ou une combinaison de ceux-ci ; et
n = 1, 2 ou 3 ;
dans lequel les couches sont caractérisées comme ayant une surface moyenne et une distance intercouche ; et
dans lequel un composé d'intercalation kaolinitique est intercalé entre au moins certaines des couches et dans lequel le composé d'intercalation kaolinitique est l'hydrazine, le DMSO, l'urée, le *N,N*-diméthylformamide, le N-méthylformamide (NMF) ou la 1-méthyl-2-pyrrolidone (NMP) .

2. Assemblage empilé selon la revendication 1, dans lequel Mₙ₊₁Xₙ comprend Sc₂C, Sc₂N, Ti₂C, Ti₂N, Mo₂C, V₂C, V₂N, Cr₂C, Cr₂N, Zr₂C, Zr₂N, Nb₂C, Nb₂N, Hf₂C, Hf₂N, Ti₃C₂, Ti₃N₂, V₃C₂, V₃C₂, Ta₃C₂, Ta₃N₂, Ti₄C₃, Ti₄N₃, V₄C₃, V₄N₃, Ta₄C₃, Ta₄N₃ ou une combinaison de ceux-ci.

3. Assemblage empilé selon la revendication 2, dans lequel Mₙ₊₁Xₙ comprend Ti₂C, V₂C, Mo₂C, Ti₂N, Ti₃C₂, Ti₃N₂, Ti₄C₃, Ti₄N₃, Ta₃C₂, Ta₃N₂, Ta₄C₃ ou Ta₄N₃ ou une combinaison de ceux-ci.

4. Assemblage empilé selon la revendication 3, dans lequel Mₙ₊₁Xₙ comprend Ti₃C₂, TiNbC, Nb₂C, Ti₃CN, Ti₂C, Ta₄C₃ ou (V_{1/2}Cr_{1/2})₃C₂ .

5. Assemblage empilé selon la revendication 1, dans lequel Mₙ₊₁Xₙ est Ti₃C₂, TiNbC, Ti₃CN ou Ti₂C.

6. Assemblage empilé selon la revendication 5, dans lequel Mₙ₊₁Xₙ est Ti₃C₂.

7. Assemblage empilé selon la revendication 1 dans lequel un alcoolate, un carboxylate, un halogénure, un hydroxyde, un hydrure, un oxyde, un sous-oxyde, un nitrure, un sous-nitrure, un sulfure, un thiol ou une combinaison de ceux-ci est lié à au moins l'une des surfaces.

8. Assemblage empilé selon la revendication 1, dans lequel le nombre de couches est dans la plage de 2 à 50.

9. Assemblage empilé selon la revendication 1, dans lequel la surface moyenne des couches est dans la plage de 100 nm² à 10 000 nm² ou de 100 um² à 10 000 µm².

10. Assemblage empilé selon la revendication 1, ledit assemblage présentant une transparence d'au moins 65 % à au moins un longueur d'onde de lumière dans la plage de 250 nm à 850 nm et une résistivité de surface inférieure à 50 micro-ohms-mètres.

11. Dispositif accumulateur d'énergie ou électrode comprenant l'assemblage empilé selon la revendication 1.
